(19)

(11) **EP 1 672 409 B1**

(12) **EUROPEAN PATENT SPECIFICATION**

(45) Date of publication and mention
of the grant of the patent:
**30.06.2010 Bulletin 2010/26**

(51) Int Cl.:
*G02F 1/01* (2006.01)    *G02B 6/122* (2006.01)
*G11B 7/135* (2006.01)

(21) Application number: **04788146.1**

(22) Date of filing: **17.09.2004**

(86) International application number:
**PCT/JP2004/014036**

(87) International publication number:
**WO 2005/029164 (31.03.2005 Gazette 2005/13)**

(54) **OPTICAL DEVICE**

OPTISCHE VORRICHTUNG

DISPOSITIF OPTIQUE

(84) Designated Contracting States:
**DE FR GB**

(30) Priority: **18.09.2003   JP 2003325720**

(43) Date of publication of application:
**21.06.2006   Bulletin 2006/25**

(73) Proprietors:
• **NEC CORPORATION**
  **Minato-ku,**
  **Tokyo 108-8001 (JP)**
• **KABUSHIKI KAISHA TOSHIBA**
  **Tokyo 105-8001 (JP)**

(72) Inventors:
• **ISHIHARA, Kunihiko,**
  **c/o NEC Corporation**
  **Tokyo (JP)**
• **HATAKOSHI, Genichi,**
  **c/o Toshiba Corporation**
  **Minato-ku, Tokyo (JP)**
• **OHASHI, Keishi,**
  **c/o NEC Corporation**
  **Tokyo (JP)**
• **ICHIHARA, Katsutaro,**
  **c/o Toshiba Corporation**
  **Minato-ku, Tokyo (JP)**

(74) Representative: **Glawe, Delfs, Moll**
**Patent- und Rechtsanwälte**
**Postfach 26 01 62**
**80058 München (DE)**

(56) References cited:
**EP-A- 1 008 870       EP-A- 1 128 372**
**JP-A- 2000 171 763    US-A- 5 337 183**

• **SHINADA SATOSHI ET AL: "Surface plasmon resonance on microaperture vertical-cavity surface-emitting laser with metal grating" APPLIED PHYSICS LETTERS, AIP, AMERICAN INSTITUTE OF PHYSICS, MELVILLE, NY, vol. 83, no. 5, 4 August 2003 (2003-08-04), pages 836-838, XP012035656 ISSN: 0003-6951**
• **DITLBACHER H ET AL: "Two-dimensional optics with surface plasmon polaritons" APPLIED PHYSICS LETTERS, AIP, AMERICAN INSTITUTE OF PHYSICS, MELVILLE, NY, vol. 81, no. 10, 2 September 2002 (2002-09-02), pages 1762-1764, XP012031810 ISSN: 0003-6951**
• **FELIDJ N. ET AL.: 'Enhanced substrate-induced coupling in two-dimensional gold nanoparticle arrays' PHYS. REV. B. vol. 66, no. 24, 2002, pages 245407-1 - 245407-7, XP002904571**

**Description**

Technical Field

The present invention relates to an optical device, more particularly to an optical device provided with a conductive thin film including an opening having a diameter which is not more than a wavelength of incident light and a periodic surface pattern, the optical device being capable of achieving a very high throughput.

Background Art

An optical recording medium such as a compact disk read only memory (CD-ROM), a digital video disk, or a digital versatile disk (DVD) has features such as a high recording density, a compact design, portability, and tenacity. Additionally, not only a price of the medium itself but also a price of a recording and reproducing device are decreasing. Therefore, the medium increasingly becomes an attractive data storage medium. Moreover, in this type of optical recording medium, there is a demand for a higher recording density in order to make possible the recording of video data for a longer time.

To increase the recording density of the optical recording medium in excess of the present value, it is necessary to reduce a size of a light beam which writes or reads data. Mainly a wavelength of the light beam and a numerical aperture of the condenser lens determine the size of the light spot in a focal point at a time when a usual optical system, that is, a condenser lens is used. In general, the size of the light spot can be reduced by use of a light source having a short wavelength and a lens having a high numerical aperture. However, in this method, there exists a spot size limitation by a so-called diffractive limitation, and the size of the spot is approximately a half of the wavelength of the light source.

In recent years, a near-field optical technology has attracted attention as a technology which is not bound by this diffractive limitation. For example, when the light beam is emitted and transmitted (passed) through a small hole whose size is not more than the wavelength, there is formed a micro light spot having approximately the same size as the hole size. In a case where this is utilized, when the hole is brought close to the recording medium, it is expected to realize writing or reading of a micro pit by the micro light spot which is not limited by the wavelength of the light source.

On the other hand, there has been a problem to be solved in an optical head utilizing such near-field optical technology. The problem is that light use efficiency is low, and it is difficult to sufficiently transmit the light via the hole. A power of the light transmitted through the hole (hole diameter d) which is disposed in a metal film and whose size is not more than wavelength $\lambda$ is proportional to a fourth power of $(d/\lambda)$, and remarkably decays as described in "Theory of Diffraction by Small Hole" authored by H. A. Bethe, Physical Review, vol. 66, pages 163 to 182 (1944). Therefore, the light transmission via the small hole has latent problems such as a signal-to-noise ratio which is excessively low for the reading and a light intensity which is excessively low for the writing. As a result, there has not been obtained so far a practical optical head using the near-field optical technology.

To conquer such situation, there have been already proposed several optical transmission technologies in which a transmittance of light transmitted through a hole array is remarkably improved by using a metal thin film provided with the hole array having a diameter that is less than the light wavelength. For example, refer to "Extraordinary Optical Transmission through Sub-wavelength Hole Arrays" authored by Ebbesen et. al., Nature, vol. 391, pages 667 to 669 (February 12, 1988), and Japanese Patent Application Laid-Open Nos. 11-72607 (or USA5,973,316), 2000-111851 (or USA6,040,936), 2000-171763 (or USA6,236,033), and 2001-133618 (or USA6,285,020).

According to these proposals, when the holes are arranged in a periodic array, or a periodic surface pattern is disposed in the metal thin film together with the holes, the light intensity largely increases as compared with a case where there is not any periodic hole or surface pattern, the light intensity being an intensity of light emitted to the metal thin film and transmitted through one or more holes made in the metal thin film and each having a diameter that is not more than the wavelength. According to an experimental verification, an increase ratio sometimes reaches 1,000-folds. It is said that this increase is caused at a time when the light falling on the metal thin film interacts resonantly with a surface plasmon mode excited by the metal thin film.

Moreover, to increase a quantity of transmitted light in the near-field optical recording head, there has been already proposed a read/write head for an optical recording device, whose metal film is provided with holes each having a size that is not more than the wavelength, and the periodic surface pattern. In the head, there is utilized a surface plasmon-enhancement effect produced by the periodic surface pattern, and the head has a very high transmitted light power density and resolution. Refer to, for example, Japanese Patent Application Laid-Open No. 2001-291265. Since this proposed optical recording head has the holes formed in the metal film and the periodic surface pattern disposed in at least one of metal film surfaces, the light falling on one of the metal film surfaces interacts with the surface plasmon mode in at least one of the metal film surfaces. This increases the light transmitted through the holes extending through the metal film.

However, even in the above-described high-efficiency optical transmission technology utilizing the conventional surface plasmons, a sufficient light transmission efficiency has not been obtained yet, and there has not been realized up to now the device whose hole diameter is less than the wavelength and which exhibits the sufficient transmission efficiency.

On the other hand, the surface plasmons excited by the surface of the metal film can pass as surface plasmon polaritons on the surface of the metal film. Furthermore, it is reported that the light transmitted by the surface plasmon polaritons is Bragg-reflected by a periodic structure in the same manner as in usual light. It is also reported that the surface plasmon polaritons passing on the metal film surface are efficiently reflected, because the periodic surface pattern functions as a mirror in a case where the period of the periodic surface pattern disposed on the metal film surface has a period length which is very close to that of the Bragg reflection conditions. Refer to, for example, "Two-dimensional Optics with Surface Plasmon Polaritons" authored by H. Ditlbacher, et al., Applied Physics Letters, 81, p1762 (September 2, 2002).

However, H. Ditlbacher, et al. only report the mirror function on the metal film surface.

As described above, it is very difficult to transmit the light via the holes which are not larger than the wavelength. To solve this problem, there are several proposals utilizing the transmitted light amplified by the surface plasmon effect, but a utilization efficiency of the resultant transmitted light with respect to the incident light is not sufficient yet.

EP-A-1 128 372, on which the preamble of claim 1 is based, discloses a surface plasmon-enhanced read/write head for optical data storage media comprising a waveguide having an end face provided with a plasmon-enhanced device. The plasmon-enhanced device comprises a metal film being fixed to the waveguide end face with one surface and having an aperture provided therethrough as well as a periodic surface topography on at least one of the surfaces of the metal film.

EP-A-1 008 870, on which the preamble of claim 14 is based, discloses an enhanced optical transmission apparatus comprising a metal film having at least one aperture extending from a first surface of the metal film to a second surface and a periodic surface topography provided on at least one of the first and second surface of the metal film.

Disclosure of the invention

Therefore, an object of the present invention is to make possible transmission of light with a high efficiency in an optical device provided with a conductive thin film having an opening and a periodic surface pattern.

In a case where transmitted light amplified by a surface plasmon effect is utilized, when a utilization efficiency of the resultant transmitted light with respect to incident light is improved, it is important to efficiently utilize energy converted into surface plasmons by a periodic structure and inhibit the energy from being scattered. That is, when the energy scattered externally from the periodic structure is efficiently returned by the Bragg reflection, it is possible to realize high-efficiency light transmission.

An optical device in a first aspect of the present invention is an optical device comprising a conductive thin film having: first and second surfaces; at least one opening extending through the film from the first surface to the second surface; and a periodic surface pattern disposed on at least one of the first and second surfaces, an intensity of light falling on the first surface and transmitted to the second surface through the opening being increased as compared with a case where any periodic surface pattern is not disposed. The periodic surface pattern includes first and second periodic surface patterns having different period lengths, and the period length of the second periodic surface pattern is substantially equal to odd time(s) as much as 1/2 of the period length of the first periodic surface pattern.

Here, the period length of the second periodic surface pattern may be a period length in a case where surface plasmon polaritons excited by the first periodic surface pattern undergo odd-order Bragg reflection by the second periodic surface pattern. To obtain an effect of the odd-order Bragg reflection, assuming that the period length of the first periodic surface pattern is $P_1$, and the period length of the second periodic surface pattern is $P_2$, $P_2/P_1$ needs to be within a range of $\pm 0.2$ of odd time(s) as much as 0.5, and a remarkable increase of light transmittance can be obtained in this range.

Furthermore, the first and second periodic surface patterns may be disposed on the same plane as the first or second surface. The first periodic surface pattern is disposed so as to correspond to a region on which light falls on, so that a region provided with the first periodic surface pattern is irradiated with the light falling on one surface. The second periodic surface pattern is disposed externally from the first periodic surface pattern. Furthermore, the region provided with the first periodic surface pattern is set to be broader than the region on which the light falls to thereby set a luminous flux diameter of the light with which the first periodic surface pattern is irradiated to be smaller than the region provided with the first periodic surface pattern. Consequently, a higher effect is obtained. Here, the luminous flux diameter of the light is defined by a width with which light intensity becomes $1/e^2$ of a peak intensity.

Moreover, an optical device in a second aspect of the present invention is an optical device in which there are periodically arranged a plurality of openings extending through the film from a first surface to a second surface and in which an intensity of light transmitted through the plurality of openings is increased as compared with a case where the plurality of openings are not periodically arranged. The plurality of periodically arranged openings are regarded as first periodic openings. The are disposed second periodic openings or periodic surface patterns formed, around the first periodic openings, with a length which is different from that of the first periodic openings, the second periodic openings including a plurality of openings which are different from the plurality of openings extending through the film from the first surface to the second surface, the periodic surface patterns being formed on one of the first and second surfaces. The period length of the second periodic openings or the periodic surface patterns is substantially equal to odd time(s) as much as 1/2 of the period length of the first periodic openings.

Here, the period length of the second periodic openings or the periodic surface patterns may be a period length in a case where surface plasmon polaritons excited by the first periodic openings undergo odd-order Bragg reflection by the second periodic openings or the periodic surface patterns. To obtain an effect of the odd-order Bragg reflection, assuming that the period length of the first periodic openings is $P_1$, and the period length of the second periodic openings or the periodic surface patterns is $P_2$, $P_2/P_1$ needs to be within a range of $\pm$ 0.2 of odd time(s) as much as 0.5, and a remarkable increase of light transmittance can be obtained in this range.

Furthermore, the first periodic openings are disposed so as to correspond to the region on which light falls, so that a region provided with the first periodic openings is irradiated with the light falling on one surface. The second periodic openings or the periodic surface patterns are disposed externally from the first periodic openings. The region provided with the first periodic surface patterns is set to be larger than the region on which the light falls to thereby set a luminous flux diameter of the light with which the first periodic openings are irradiated to be smaller than the region provided with the first periodic openings. Consequently, a higher effect is obtained.

Furthermore, an optical device in a third aspect of the present invention is an optical device comprising a conductive thin film having: first and second surfaces; at least one opening extending through the film from the first surface to the second surface; and a plurality of periodic surface patterns disposed on the first and second surfaces, an intensity of light falling on the first surface and transmitted to the second surface through the opening being increased as compared with a case where any periodic surface pattern is not disposed. The plurality of periodic surface patterns include first and second periodic surface patterns disposed on the first surface and having mutually different period lengths, and a third periodic surface pattern disposed on the second surface. The period length of the second periodic surface pattern is substantially equal to odd time(s) as much as 1/2 of the period length of the first periodic surface pattern. The period length of the third periodic surface pattern is substantially equal to odd time(s) as much as 1/2 of a value $\lambda/n_d$ obtained by dividing a wavelength $\lambda$ of the transmitted light whose intensity is increased by an effective refractive index $n_d$ of a medium substantially adjacent to the second surface. Alternatively, assuming that a wavelength of the transmitted light whose intensity is increased is $\lambda$, a permittivity of the conductive thin film is $\varepsilon_m$, and a permittivity of a medium substantially adjacent to the second surface is $\varepsilon d$, the period length of the third periodic surface pattern is substantially equal to odd time(s) as much as 1/2 of $\lambda/(\varepsilon_m \bullet \varepsilon_d/(\varepsilon_m+\varepsilon_d))^{1/2}$.

Here, the period length of the second periodic surface pattern may be a period length in a case where surface plasmon polaritons excited by the first periodic surface pattern undergo odd-order Bragg reflection by the second periodic surface pattern. To obtain an effect of the odd-order Bragg reflection, assuming that the period length of the first periodic surface pattern is $P_1$, and the period length of the second periodic surface pattern is $P_2$, $P_2/P1$ needs to be within a range of $\pm$ 0.2 of odd time(s) as much as 0.5, and a remarkable increase of light transmittance can be obtained in this range. Furthermore, the third periodic surface pattern disposed on the second surface is disposed so that the surface plasmon polaritons undergo odd-order Bragg reflection by the third periodic surface pattern disposed on the second surface. To obtain the effect of the odd-order Bragg reflection, a ratio $P_3/(\lambda/n_d)$ between a value $\lambda/n_d$ obtained by dividing the wavelength $\lambda$ of the transmitted light whose intensity is increased by the effective refractive index $n_d$ of the medium substantially adjacent to the second surface and a period length $P_3$ of the third periodic surface pattern may be within a range of $\pm$ 0.2 of odd time(s) as much as 0.5. Alternatively, assuming that the wavelength of the transmitted light whose intensity is increased is $\lambda$, the permittivity of the conductive thin film is $\varepsilon_m$, and the permittivity of the medium substantially adjacent to the second surface is $\varepsilon_d$, a relation formula of the period length $P_3$ of the third periodic surface pattern $P_3/(\lambda/(\varepsilon_m \bullet \varepsilon_d/(\varepsilon_m+\varepsilon_d))^{1/2})$ may be within the range of $\pm$ 0.2 of odd time(s) as much as 0.5. It is possible to obtain a remarkable increase of a light transmittance in such range. On the other hand, a further effect in this structure lies in that the intensity of the light transmitted through the opening can be strongly concentrated in the vicinity of the opening. That is, when the period length $P_3$ of the third periodic surface pattern is within the above-described range, it is possible to remarkably increase the intensity of the light in the vicinity of the opening on an emission side.

Moreover, in the present invention, there is provided an optical head for an optical recording medium. This optical head is an optical head which records at least information in the optical recording medium by light from a light source, and the optical head comprises: waveguide means for guiding the output light of the light source; condenser means for condensing the light guided by the waveguide means; and any one of the optical devices in the above-described first to third aspects of the present invention. The optical device is disposed so as to bring an opening of the optical device close to the optical recording medium, and the optical recording medium is irradiated with a part of the condensed light.

According to the above-described constitution, there is obtained an optical head in which the intensity of the light emitted from the small opening is increased to a value that is not less than a value required for the recording in the optical recording medium, and the information can be recorded with a density that is higher than ever.

Furthermore, in the present invention, there is provided an optical recording device. The optical recording device comprises the optical head in order to record the information in the optical recording medium by the light from the light source.

According to the above constitution, the optical recording device is obtained in which the information can be recorded with the density that is higher than ever.

Additionally, there is provided a condensing device which condenses only light having a specific wavelength from the light from the light source by use of the optical device of the present invention.

Moreover, there is provided a near-field optical microscope which condenses only light having a specific wavelength from the light from the light source to irradiate a sample with the light by use of the optical device of the present invention.

Brief Description of the Drawings

FIG. 1 is a sectional view of an optical device in a first embodiment of the present invention;

FIG. 2(A) is a plan view showing a first surface of a conductive thin film in the optical device shown in FIG. 1;

FIG. 2(B) is a plan view (bottom plan view) showing a second surface of the conductive thin film in the optical device shown in FIG. 1; .

FIG. 3 is a sectional view showing a first modification of the optical device of FIG. 1;

FIG. 4(A) is a plan view showing a first surface of a conductive thin film in a second modification of the optical device of FIG. 1;

FIG. 4(B) is a plan view (bottom plan view) showing a second surface of the conductive thin film in the second modification;

FIG. 5(A) is a plan view showing a first surface of a conductive thin film in a third modification of the optical device of FIG. 1;

FIG. 5(B) is a plan view (bottom plan view) showing a second surface of the conductive thin film in the third modification;

FIG. 6(A) is a plan view showing a first surface of a conductive thin film in a fourth modification of the optical device of FIG. 1;

FIG. 6(B) is a plan view (bottom plan view) showing a second surface of the conductive thin film in the fourth modification;

FIG. 7(A) is a plan view showing a first surface of a conductive thin film in a fifth modification of the optical device of FIG. 1;

FIG. 7(B) is a plan view (bottom plan view) showing a second surface of the conductive thin film in the fifth modification;

FIG. 8(A) is an explanatory view of a function of an optical device having a conventional structure;

FIG. 8(B) is a conceptual diagram showing a function of the optical device of FIG. 1;

FIG. 9 is a graph showing a correlation between a period length of a periodic surface pattern and an enhancement factor of transmitted light in the optical device of FIG. 1;

FIG. 10(A) shows an electric field distribution in the optical device having a conventional structure;

FIG. 10(B) shows an electric field distribution in the optical device of FIG. 1;

FIG. 11 is a sectional view of an optical device in a second embodiment of the present invention;

FIG. 12 is a diagram showing a first modification of the optical device of FIG. 11;

FIG. 13 is a diagram showing a second modification of the optical device of FIG. 11;

FIG. 14(A) is a conceptual diagram showing the function of the optical device having the conventional structure;

FIG. 14(B) is a conceptual diagram showing the function of the optical device of FIG. 11;

FIG. 15 is a graph showing a correlation between a period length of a periodic surface pattern and an enhancement factor of light intensity in the optical device of FIG. 11;

FIG. 16(A) shows an electric field distribution in the optical device including the conventional structure;

FIG. 16(B) shows an electric field distribution in the optical device of FIG. 12;

FIG. 17 is a diagram showing one embodiment of an optical head of the present invention;

FIG. 18 is a diagram showing one embodiment of an optical recording and reproducing device of the present invention;

FIG. 19(A) is a diagram showing one embodiment of a condensing device of the present invention;

FIG. 19(B) is a diagram showing another embodiment of the condensing device of the present invention; and

FIG. 20 is a diagram showing one embodiment of a near-field microscope of the present invention.

Best Mode for Carrying out the Invention

(Embodiment 1)

Next, an embodiment of the present invention will be described with reference to the drawings.

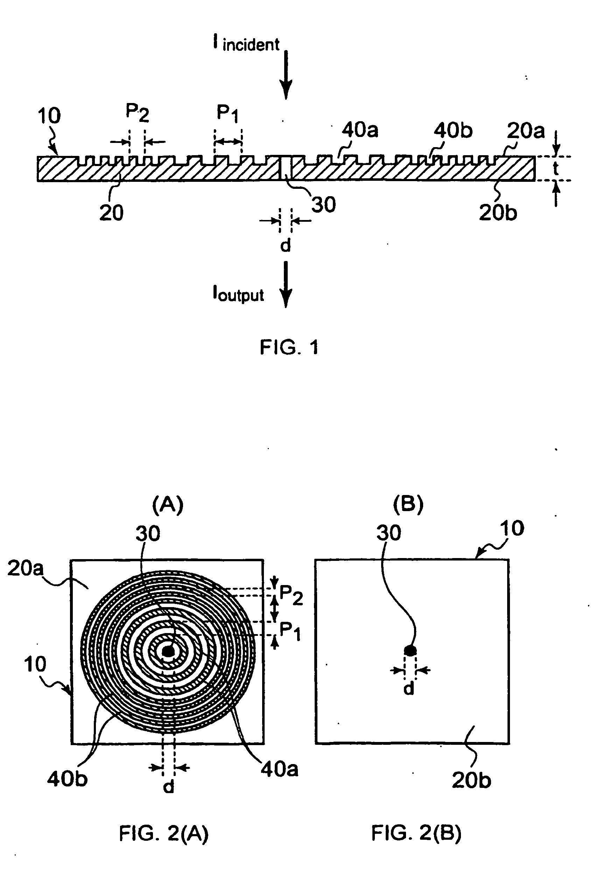

FIGS. 1, and 2(A) and (B) are diagrams showing an optical device 10 in a first embodiment of the present invention. The optical device 10 has a conductive thin film 20 including a first surface 20a and a second surface 20b. The first surface 20a of the conductive thin film 20 is irradiated with incident light. The conductive thin film 20 has at least one hole whose diameter is d, that is, an opening 30. The conductive thin film 20 is made of a metal or a doped semiconductor material, and aluminum, silver, gold, chromium or the like is preferable. In a case where light of a visible light region is used as incident light, silver is preferable from a viewpoint of optical loss, but the material is not necessarily limited to silver.

The conductive thin film 20 is provided with a first periodic surface pattern 40a in at least one of the first surface 20a and the second surface 20b (the first surface 20a only in the present embodiment, but the patterns may be formed on the opposite surfaces), and the film is provided with a second periodic surface pattern 40b whose period length is different from that of the first periodic surface pattern.

The first periodic surface pattern 40a is disposed so as to correspond to incident light. To be more specific, the first periodic surface pattern 40a is disposed in the same region as a region irradiated with the incident light, or a slightly larger region. In other words, the first periodic surface pattern 40a is disposed so that the region provided with the first periodic surface pattern 40a is irradiated with the incident light. In a case where these regions are circular, the first periodic surface pattern 40a is formed so that a diameter of the region provided with the first periodic surface pattern 40a becomes larger than a luminous flux diameter of the incident light. It is to be noted that the luminous flux diameter of the light is defined by a width with which the light intensity becomes $1/e^2$ of a peak intensity.

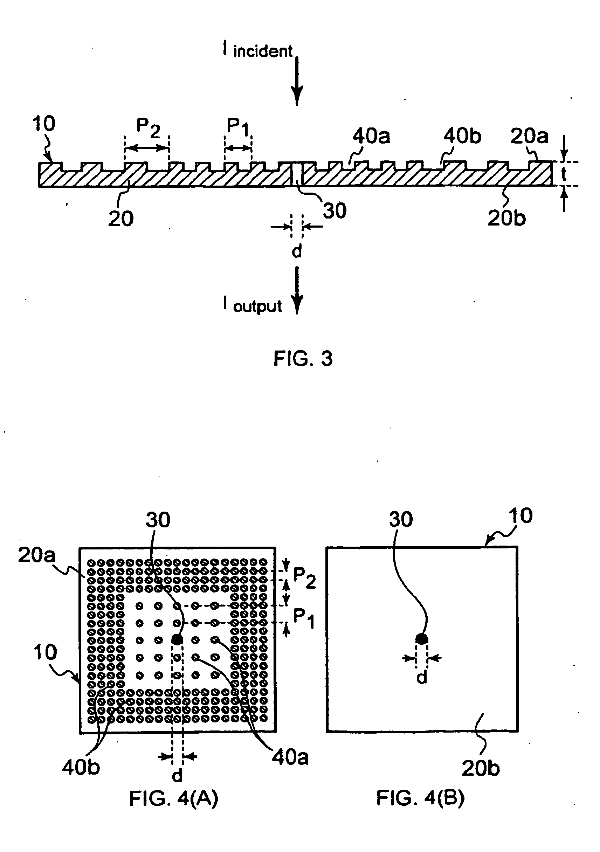

The second periodic surface pattern 40b is disposed in a periphery of a region provided with the first periodic surface pattern 40a. A period length $P_2$ of the second periodic surface pattern 40b is odd time(s) (value assumed to be substantially equal to odd time(s) as much as 1/2) as much as about 1/2 of the period length $P_1$ of the first periodic surface pattern 40a. FIGS. 1 and 2(A) show a case where the period length $P_2$ of the second periodic surface pattern 40b is about 1/2 of the period length $P_1$ of the first periodic surface pattern 40a, but, as shown in FIG. 3, the period length $P_2$ of the second periodic surface pattern 40b may be about 3/2 of the period length $P_1$ of the first periodic surface pattern 40a.

The periodic surface pattern refers to a pattern in which regions raised from a certain reference face and/or depressed regions are periodically or regularly repeatedly arranged (in the form of, for example, a regular two-dimensional grid or concentric circle). Here, the term "periodic surface pattern" should be distinguished from the opening 30 extending through the whole thickness of the conductive thin film 20. That is, the term "periodic surface pattern" is used for describing a periodic protrusion or dent which does not extend through the whole thickness of the conductive thin film 20 and therefore which is not an opening. The periodic surface pattern may be formed into any arbitrary pattern. In a case where the periodic surface patterns are disposed around one opening, a plurality of dents or protrusions are preferably concentrically arranged centering on the opening, or a plurality of concentric grooves or protrusions may be arranged. However, the intention of the present invention is not restricted even by any specific dimension of the periodic surface pattern.

The incident light having an intensity denoted with symbol $I_{incident}$ and shown by an arrow in an upper part of FIG. 1 (similarly in FIG. 3) is directed to the first surface 20a of the conductive thin film 20. The light is transmitted as output light having an increased intensity denoted with symbol $I_{output}$ and shown by an arrow in a lower part of FIG. 1 from the opening 30 in the second surface 20b of the conductive thin film 20. It is to be noted that a transmission intensity increases even in a case where the light passes through this structure and moves in an opposite direction, that is, if the light falls on the second surface 20b and is transmitted as the output light from the first surface.

A diameter d of the opening 30 is preferably smaller than a wavelength of the incident light falling on the opening 30 in order to increase and maximize the transmission intensity and obtain a maximum resolution. That is, the opening on an emission side preferably has a diameter which is less than the wavelength.

A thickness of the conductive thin film 20 is denoted with t, and the conductive thin film 20 has to be sufficiently thickened so as to be optically opaque. That is, the thickness t has to be larger than a penetration thickness of the incident light.

FIGS. 1 to 3 show a thin conductive thin film 20 which is not supported. That is, the conductive thin film 20 is not adjacent or fixed to a support structure (substrate). However, in the present invention, the conductive thin film is deposited on glass or quartz, and the thin conductive thin film 20 may be fixed to the substrate.

When the substrate is used, the periodic surface pattern may be disposed on either of an exposed surface of the conductive thin film 20 and the surface of the film on the side of an interface between the film and the substrate. When the periodic surface pattern is disposed on the surface of the conductive thin film on the side of the interface between the film and the substrate, for example, a negative pattern is produced on the surface of the substrate, and the conductive thin film is deposited on the substrate provided with the negative pattern, so that the periodic surface pattern can be disposed on the conductive thin film.

In FIGS. 1 and 3, the opening 30 is drawn so as to extend through the film from the first surface to the second surface. In other words, the opening 30 is shown so as to extend through the whole thickness of the conductive thin film 20 in FIGS. 1 and 3. However, unless the opening 30 extends through the conductive thin film 20, there may be left a conductive thin film which is optically sufficiently thin, that is, whose thickness is approximately smaller than the penetration thickness of the incident light. For example, in a case where the conductive thin film is fixed to the substrate, and an opening is to be formed from a side opposite to a substrate side, to prevent the substrate surface from being damaged at a time when the opening is formed so as to extend through the whole thickness of the conductive thin film, the conductive thin film may be left which is approximately optically sufficiently thin without being extended through the opening.

Furthermore, the opening 30 shown in FIGS. 1 to 3 is circular, but the shape may be another shape such as a slit shape, a rectangle, a polygon, or an ellipse without departing from the scope of the present invention. As described above, even from the scope of the present invention, the opening on the emission side preferably has a diameter which is smaller than the wavelength in order to obtain a high resolution property that is not more than the wavelength. In a case where the opening has the slit shape, the rectangular shape, or the elliptic shape, at least a length in a short-axis direction is preferably smaller than the wavelength.

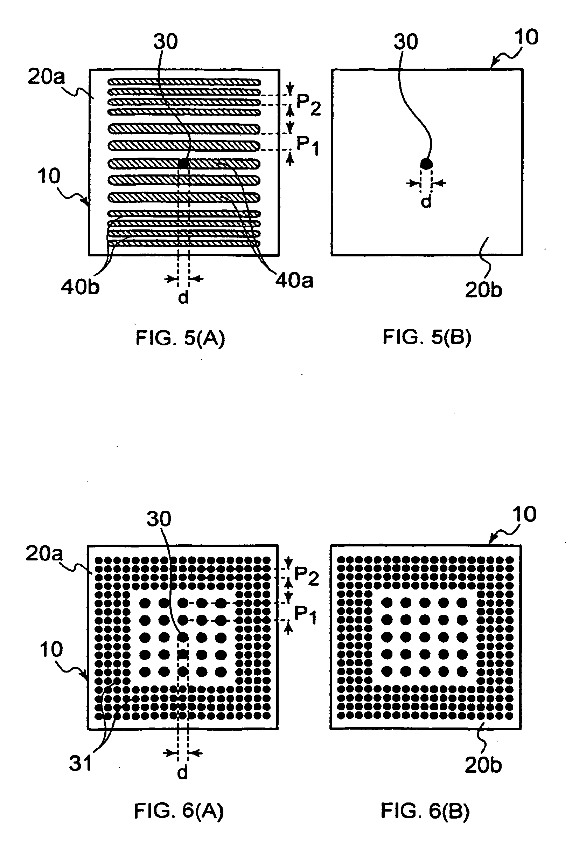

Moreover, in FIGS. 1 to 3, the first and second periodic surface patterns 40a, 40b are drawn as concentric circles, but they are not limited to the periodic surface patterns formed into the concentric circles. For example, as shown in FIGS. 4(A) and (B), a plurality of dents may be arranged at a first interval (period length) around the opening 30 in the form of grids to form a first periodic surface pattern, and a plurality of dents may be arranged at a second interval (period length) which is different from the first interval externally from the first periodic surface pattern in the form of grids to form a second periodic surface pattern. As shown in FIGS. 5(A) and (B), a plurality of grooves (of a one-dimensional periodic arrangement) may be arranged in parallel at a first interval (period length) along a predetermined direction to form a first periodic surface pattern, and a plurality of grooves may be arranged in parallel with one another at a second interval which is different from the first interval to form a second periodic surface pattern.

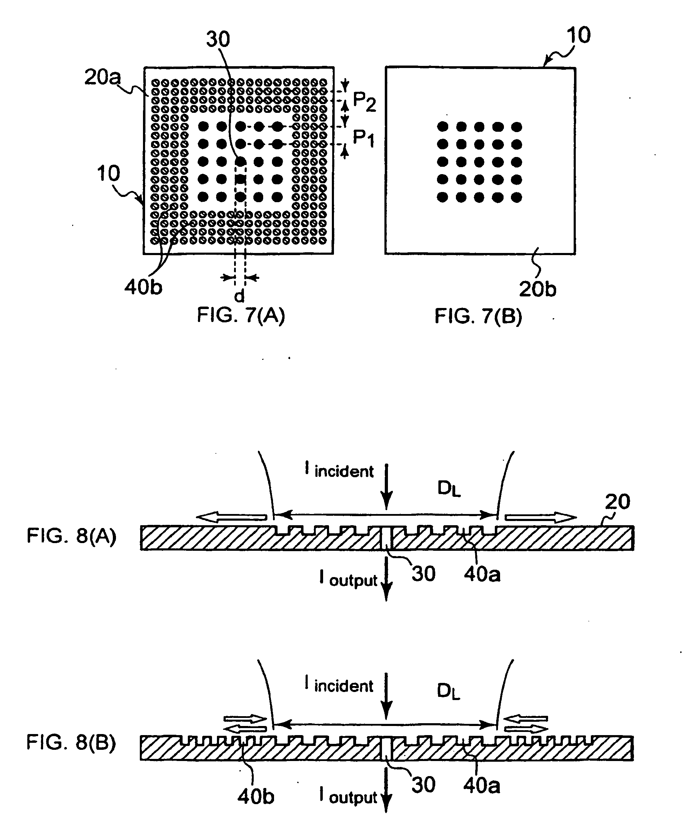

Furthermore, each of FIGS. 1 to 3 shows only one opening 30. As shown in FIGS. 6(A) and (B) or FIGS. 7(A) and (B), a plurality of openings 30 may be periodically formed with a first period length to form first periodic openings. In this case, around the first periodic openings, there are formed second periodic openings 31 (FIG. 6) or periodic surface patterns 40b (FIG. 7) which are periodically arranged with a second period length which is different from the first period length. Here, the second periodic openings 31 are a plurality of holes extending through the film from the first surface 20a to the second surface 20b, and the periodic surface patterns 40b are a plurality of dents formed in the first surface 20a and/or the second surface 20b.

Moreover, although not shown, the first periodic openings (corresponding to 30 in FIG. 6) may be constituted of a plurality of openings arranged into the concentric circles. Similarly, the second periodic openings (corresponding to 31 in FIG. 6) may be constituted of a plurality of openings arranged into concentric circles. A plurality of dents may be arranged into concentric circles as periodic surface patterns which replace the second periodic openings (corresponding to 40b in FIG. 7).

Here, a function of the optical device of the present invention will be described with reference to conceptual diagrams shown in FIGS. 8(A) and (B).

FIG. 8(A) is for describing a function of a conventional structure. The incident light (luminous flux diameter $D_L$) having the intensity $I_{incident}$ interacts with surface plasmon polaritons by the first periodic surface pattern 40a formed in the conductive thin film 20. The light is transmitted from the opening 30 to the second surface as output light having the increased intensity $I_{output}$. However, a part of energy converted from light into surface plasmons by the first periodic surface pattern 40a passes as the surface plasmon polaritons on the surface of the conductive thin film 20, that is, an interface between the conductive thin film 20 and a dielectric. The energy is scattered externally from the first periodic surface pattern as shown by white arrows. On the other hand, in the optical device of the present invention shown in FIG. 8(B), since the surface plasmon polaritons passing externally from the first periodic surface pattern are Bragg-reflected by the second periodic surface pattern, it is possible to collect even the energy which has been heretofore scattered into the opening 30 with good efficiency, and high-efficiency light transmission via the openings is obtained.

Next, the period length $P_1$ of the first periodic surface pattern or the first periodic opening will be described in accordance with preferable dimensions in consideration of a surface plasmon mode.

In general, conditions for exciting the surface plasmons in the conductive thin film provided with the periodic structure having the period length $P_1$ are represented as follows from a law of conservation of momentum:

$$k_{sp} = k_x + i \bullet G \qquad \text{(Equation 1)},$$

wherein $k_{sp}$ denotes a wave number vector of the surface plasmons generated in the interface between the conductive thin film and the dielectric, $k_x$ denotes a wave number vector component of the incident light in a direction of a plane of the conductive thin film, that is, in a tangent direction, G denotes a reciprocal lattice vector (G = $2\pi$/P1) of the periodic structure, and i denotes an arbitrary integer.

Moreover, an absolute value of the wave number vector $k_{sp}$ of the surface plasmons is given by the following dispersion relation formula:

$$|k_{sp}| = (\omega/c) \bullet (\varepsilon_m \bullet \varepsilon_d / (\varepsilon_m + \varepsilon_d))^{1/2} \qquad \text{(Equation 2)},$$

wherein w denotes an angular frequency of the incident light, c denotes velocity of light, $\varepsilon_m$ denotes permittivity of the conductive thin film, $\varepsilon_d$ denotes permittivity of a dielectric medium adjacent to the conductive thin film, and they have a relation of $\varepsilon_m < 0$, $|\varepsilon_m| > \varepsilon_d$

In a case where the light is emitted perpendicularly into the conductive thin film, the surface plasmon mode is effectively excited, and the wavelength $\lambda$ with which the intensity of the light transmitted on the emission side is most increased is represented by the following equation obtained by combining the above equations 1 and 2:

$$\lambda = P_1 \bullet (\varepsilon_m \bullet \varepsilon_d / (\varepsilon_m + \varepsilon_d))^{1/2} \qquad \text{(Equation 3)}$$

On the other hand, the energy converted into the surface plasmons by the periodic structure having the period length $P_1$ passes as the surface plasmon polaritons in the interface between the conductive thin film and the dielectric. At this time, the following equation represents conditions for Bragg-reflecting the surface plasmon polaritons having the wave number vector $k_{sp}$ by the periodic structure having the period length $P_2$:

$$2 \bullet P_2 = m \bullet (2 \bullet \pi / k_{sp}) \qquad \text{(Equation 4)},$$

wherein m is generally established by an arbitrary integer, but m is usually limited to an odd number in order to obtain a strong Bragg reflection effect. Furthermore, in a case where it is considered that the surface plasmon polaritons decay depending on a propagation distance, when m is smaller, the efficiency is high, and m = 1 is preferable from the respect of the efficiency. On the other hand, when it is difficult to select m = 1 from difficulty in forming a micro structure during manufacturing, m = 3 is preferably selected.

There is derived from the above equations 1 and 4 the following relation between $P_1$ and $P_2$ for effectively exciting the surface plasmon mode by the periodic structure having the period length $P_1$, and efficiently Bragg-reflecting the propagating surface plasmon polaritons by the periodic structure having the period length $P_2$ in a case where the light is allowed to fall perpendicularly on the conductive thin film:

$$P_2 = (m/2) \bullet P_1 \qquad \text{(Equation 5)}.$$

It is seen from this equation that the incident light is transmitted through the opening with good efficiency in the relation of $P_2/P_1 = m/2$

In actual, there were prepared a plurality of optical devices having different period lengths $P_2$, and an enhancement factor of the transmitted light was measured.

Each optical device was prepared by first forming silver into a film having a thickness of 300 nm on a quartz substrate by a DC sputtering process. Next, by use of a focused ion beam (FIB), a concentric circular groove constituting the first periodic surface pattern 40a was formed into a period length $P_1$ = 600 nm, a depth of 100 nm, and a frequency of 10. Subsequently, externally from the groove, a concentric circular groove constituting the second periodic surface pattern 40b was formed into a period length $P_2$ = 150 to 1650 nm, a depth of 100 nm, and a frequency of 10. At this time, an outer diameter of the outermost concentric circular groove in the first periodic surface pattern 40a is about 12 $\mu$m. A width of the groove was set to a half of one period. Thereafter, a micro circular opening having a diameter of 100 nm was formed in the center of the concentrically circular periodic surface pattern to thereby form the optical device 10 by FIB working. A device which did not have the second periodic surface pattern was simultaneously prepared separately from the optical devices, and was used as a sample for confirming an increased effect of the transmitted light.

First, a light transmission spectrum was measured with respect to the device which did not have any second periodic surface pattern, and it was confirmed in the device including this constitution that a transmission peak appeared in the vicinity of about 650 nm. Next, semiconductor laser having a wavelength of 650 nm was used as a light source, and a light transmission intensity from the opening was checked with respect to the device which did not have any second periodic surface pattern, and the devices (optical devices 10) having the second periodic surface patterns. The light transmission intensity from the opening was measured in a position right above the opening by use of a microspectroscopic device. The center of the concentrically circular region as the first periodic surface pattern was perpendicularly irradiated with laser light, and the luminous flux diameter in the irradiated face was set to about 12 $\mu$m.

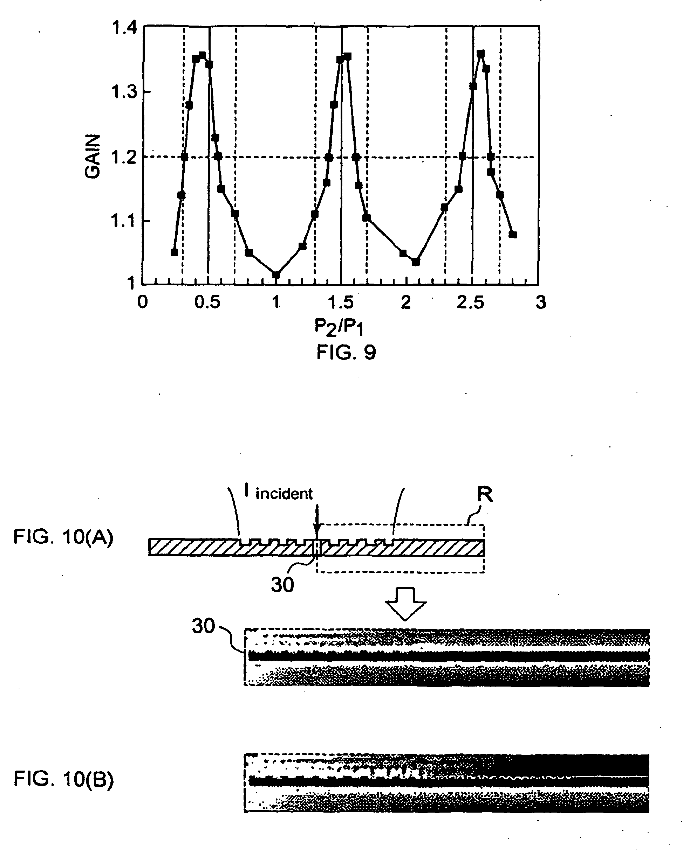

FIG. 9 shows a measurement result, that is, an enhancement factor of the transmitted light with respect to the period length $P_2$ of the second periodic surface pattern. Here, it is assumed that the abscissa of the drawing indicates a ratio of $P_2/P_1$ of the period length $P_2$ of the second periodic surface pattern with respect to the period length $P_1$ of the first periodic surface pattern. The enhancement factor of the transmitted light was calculated by the following equation:

$$\text{Gain} = \text{Enhancement factor of transmitted light} =$$
$$\text{(light transmission intensity from opening of device having second}$$
$$\text{periodic surface pattern)/(light transmission intensity from opening of device}$$
$$\text{which does not have second periodic surface pattern)} \qquad \text{(Equation 6)}.$$

As shown in FIG. 9, the enhancement factor of the transmitted light exhibits a remarkable increase, when a value of $P_2/P_1$ corresponds to a value close to a value of 0.5, 1.5, or 2.5, that is, a value close to odd time(s) as much as 1/2 (regarded as a value which is substantially equal to odd time(s) as much as 1/2). When a deviation from the odd time(s) as much as 1/2 is large, an effect of enlargement rapidly decreases. However, when the value of $P_2/P_1$ is within a range of $\pm$ 0.2 of odd time(s) as much as 0.5, a remarkable increase of the transmitted light is obtained. A range of $P_2/P_1$ in which the enhancement factor of the transmitted light is 1.2 or more is 0.32 to 0.57, 1.42 to 1.62, and 2.43 to 2.64. The enhancement factors of the transmitted light at a time when the value of $P_2/P_1$ is 0.5, 1.5, and 2.5 are 1.34, 1.35, and 1.31, respectively. A reason why the value of $P_2/P_1$ giving the maximum value of the enhancement factor of the transmitted light slightly deviates from the odd time(s) as much as 1/2 is supposedly that the wave number vector $k_{sp}$ of the surface plasmon polaritons coupled or Bragg-reflected by the periodic surface pattern with good efficiency slightly depends on not only the period length but also the groove depth or groove shape.

On the other hand, the effect of the Bragg reflection by the second periodic surface pattern was confirmed by electromagnetic calculation. FIGS. 10(A) and (B) show distributions of absolute values of electric fields in the conventional structure and optical device of the present invention. As an electric field distribution, there is shown an only one region (region R (calculation region) shown by a broken line in an upper part of FIG. 10(A)) by use of the opening 30 as a symmetric face. A periphery of silver corresponding to the conductive thin film 20 is all regarded as air without considering any substrate. The period length of the periodic surface pattern in the conventional structure and the period length $P_1$ of the first periodic surface pattern are 600 nm, the period length $P_2$ of the second periodic surface pattern is 300 nm, and the wavelength $\lambda$ of the incident light is 650 nm. It can be visually confirmed from FIG. 10(A) that the energy is scattered externally from the first periodic surface pattern in the conventional structure. However, it can be visually confirmed that the energy is inhibited from being scattered by the second periodic surface pattern in the optical device of the present invention of FIG. 10(B).

As described above, according to the present embodiment, the period length of the second periodic surface pattern is set to be substantially equal to odd time(s) as much as 1/2 of the period length of the first periodic surface pattern in the optical device provided with the conductive thin film including the opening having the diameter which is not more than the wavelength and two periodic surface patterns having different period lengths. Consequently, the energy scattered externally from the first periodic surface pattern is Bragg-reflected by the second periodic surface pattern with good efficiency to thereby raise the efficiency, and high-efficiency light transmission can be realized.

Moreover, according to the present embodiment, the second period length is set to be substantially equal to odd time(s) as much as 1/2 of the first period length in the optical device provided with the conductive thin film including the first periodic openings arranged with the first period length, and the second periodic openings arranged with the second period length or the periodic surface pattern. Consequently, there is an effect that the energy scattered externally from the first periodic opening is Bragg-reflected by the second periodic opening or the periodic surface pattern with good efficiency to thereby raise the efficiency, and the high-efficiency light transmission is realized.

(Embodiment 2)

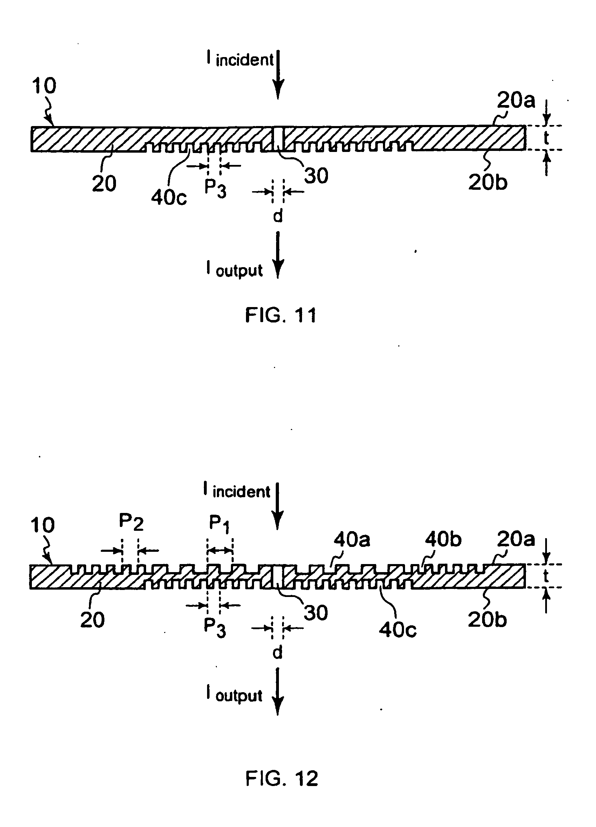

Next, a second embodiment of the present invention will be described with reference to FIGS. 11 to 13.

FIG. 11 is a diagram showing an optical device 10 of the present embodiment. The optical device 10 has a conductive thin film 20 including a first surface 20a and a second surface 20b. The first surface 20a of the conductive thin film 20 is irradiated with incident light. The conductive thin film 20 has at least one hole having a diameter d, that is, an opening 30.

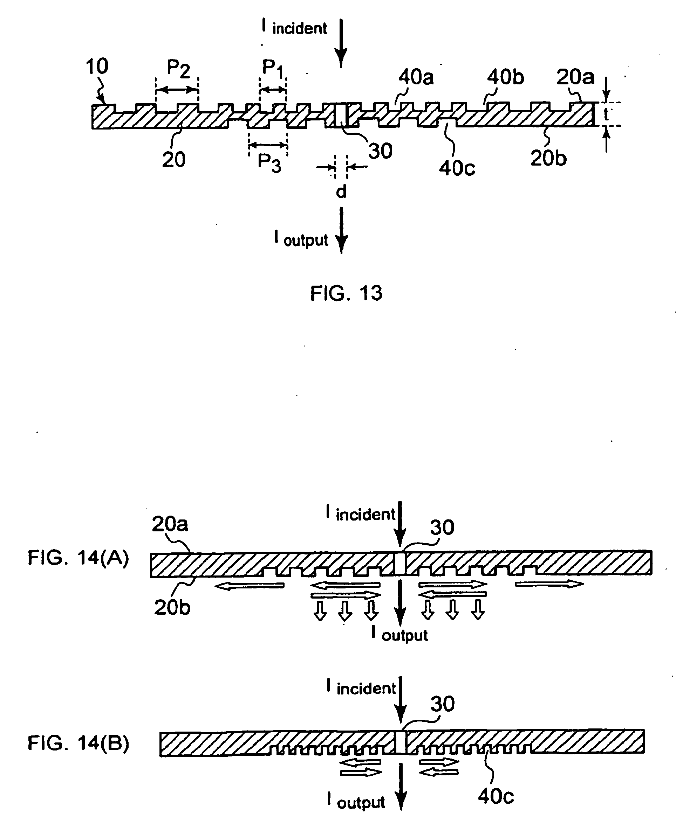

The conductive thin film 20 is provided with a third periodic surface pattern 40c on the second surface 20b of the conductive thin film 20. Here, a reason why the periodic surface pattern 40c formed on the second surface 20b is referred to as the third periodic surface pattern is that the pattern can be combined with the first and second periodic surface patterns 40a and 40b shown in FIG. 1 or 3 as shown in FIG. 12 or 13. A period length $P_3$ of the third periodic surface pattern 40c is the odd time(s) (value assumed to be substantially equal to 1/2) as much as about 1/2 of a value $\lambda/n_d$ obtained by dividing a wavelength $\lambda$ of a light source by an effective refractive index $n_d$ of a medium substantially adjacent to the second surface 20b. Alternatively, assuming that a permittivity of silver in the wavelength $\lambda$ of the light source is $\varepsilon_m$, and a permittivity of the medium substantially adjacent to the second surface is $\varepsilon_d$, the period length $P_3$ of the third periodic surface pattern 40c is the odd time(s) (value assumed to be substantially equal to 1/2) of $\lambda/(\varepsilon_m \cdot \varepsilon_d/(\varepsilon_m+\varepsilon_d))^{1/2}$.

The first surface of the conductive thin film may or may not be provided with the periodic surface pattern, or may be provided with a plurality of periodic surface patterns having different period lengths. In a case where the first surface is provided with a plurality of periodic surface patterns, the period length of the periodic surface pattern may include the structure described above in Embodiment 1. FIGS. 12 and 13 show a structure obtained by combining the first and second periodic surface patterns shown in FIGS. 1 and 3, respectively, as described above. In each of FIGS. 12 and 13, the first surface is provided with the first periodic surface pattern 40a, and the second periodic surface pattern 40b whose period length is different from that of the first periodic surface pattern. The period length $P_2$ of the second periodic surface pattern 40b is the odd time(s) (regarded as a value which is substantially equal to odd time(s) as much as 1/2) as much as about 1/2 of the period length $P_1$ of the first periodic surface pattern 40a. FIG. 12 shows a case where the period length $P_2$ of the second periodic surface pattern 40b is about 1/2 of the period length $P_1$ of the first periodic surface pattern 40a, and the period length $P_3$ of the third periodic surface pattern 40c is about 1/2 of $\lambda/n_d$ or about 1/2 of $\lambda/(\varepsilon_m \cdot \varepsilon_d/(\varepsilon_m+\varepsilon_d))^{1/2}$. FIG. 13 shows a case where each period length is about 3/2.

The incident light having an intensity denoted with symbol $I_{incident}$ and shown by an arrow in an upper part of FIG. 11 to 13 travels to the first surface 20a of the conductive thin film 20, and the light is transmitted as output light having an increased intensity denoted with symbol $I_{output}$ and shown by an arrow in a lower part of FIG. 11 to 13 from the opening 30 in the second surface 20b of the conductive thin film 20.

FIGS. 11 to 13 show a thin conductive thin film 20 which is not supported. That is, the conductive thin film 20 is not adjacent or fixed to a support structure (substrate). However, in the present invention, the conductive thin film is deposited on glass or quartz, and the thin conductive thin film 20 may be fixed to the substrate.

Here, a function of the optical device of the present invention will be described with reference to conceptual diagrams shown in FIGS. 14(A) and (B).

FIG. 14(A) is for describing a function of a conventional structure. The first surface 20a of the conductive thin film 20 is irradiated with the incident light having the intensity $I_{incident}$. The light passed through the opening 30 and emitted on a second surface side interacts with a surface plasmon mode by the periodic surface pattern formed on the conductive thin film, and is transmitted as the output light having an increased intensity $I_{output}$. Here, the periodic surface pattern is formed on the second surface 20b, that is, the surface on an emission side which is a side opposite to the surface irradiated with the incident light. Even in such structure, the incident light interacts with the surface plasmon mode, and the intensified light is emitted. At this time, a relation between the period length of the periodic surface pattern for exciting the surface plasmons and the wavelength is given by the above equation 3. However, a part of energy converted by the periodic surface pattern propagates as surface plasmon polaritons on the surface of the conductive thin film, that is, an interface between the conductive thin film and a dielectric, and the part is scattered externally from the periodic surface pattern. Furthermore, a part of the energy converted by the periodic surface pattern is emitted in a perpendicular direction of the periodic surface pattern depending on diffraction conditions. That is, the light is also emitted from a position distant from the vicinity of the opening, and the efficiency is low for a structure to obtain intense light from the vicinity of the opening.

On the other hand, in the optical device of the present invention shown in FIG. 14(B), the light emitted from the opening interacts with the surface plasmon mode depending on the third periodic surface pattern, and propagates as surface plasmon polaritons. Here, the third periodic surface pattern also satisfies odd-order Bragg reflection conditions of the surface plasmon polaritons. Consequently, the energy scattered externally from the third periodic surface pattern is suppressed. Furthermore, since the energy diffracted and emitted in the perpendicular direction of the periodic surface pattern is also suppressed, the energy can be utilized with good efficiency, and it is possible to obtain high-efficiency light transmission and efficient concentration of the energy in the vicinity of the opening.

Next, the period length $P_3$ of the periodic surface pattern will be described in accordance with a preferable dimension.

The light allowed to fall on the surface 20a is transmitted through the opening 30, and the light emitted from the opening 30 to the second surface 20b interacts with the surface plasmon mode of the third periodic surface pattern, and propagates as surface plasmon polaritons. The conditions for Bragg-reflecting the surface plasmon polaritons by the periodic structure having the period length $P_3$ are described by replacing $P_2$ of the above equation 4 with $P_3$. Furthermore, when the above equation 2 is combined, the relation between $P_3$ and wavelength $\lambda$ is derived as follows:

$$P_3 = (m/2) \bullet (\lambda/(\varepsilon_m \bullet \varepsilon_d/(\varepsilon_m + \varepsilon_d))^{1/2}) \quad \text{(Equation 7)},$$

wherein m is generally established by an arbitrary integer, but m is limited to an odd number in order to suppress the diffraction of the third periodic surface pattern in the perpendicular direction. Furthermore, in a case where it is considered that the surface plasmon polaritons decay depending on a propagation distance, when m is small, the efficiency is high, and m = 1 is preferable from the respect of the efficiency. On the other hand, when it is difficult to select m = 1 because of difficulty in forming the micro structure during the manufacturing, m = 3 is preferably selected.

Moreover, if $|\varepsilon_m| \gg \varepsilon_d$, the equation 7 can be approximated by the following equation:

$$P_3 \approx (m/2) \bullet (\lambda/n_d) \quad \text{(Equation 8)},$$

wherein $n_d$ is $\varepsilon_d^{1/2}$.

It can be understood from this equation, the optical device of FIG. 11 can transmit light with good efficiency, when $P_3$ is equal to odd time(s) as much as 1/2 of a value obtained by dividing the wavelength $\lambda$ of the light source by a permittivity $n_d$ of a dielectric medium adjacent to the conductive thin film.

In actual, there were prepared a plurality of optical devices of the present embodiment, and transmission characteristics of the devices were measured.

Each optical device was prepared by first forming silver into a film having a thickness of 300 nm on a quartz substrate by a DC sputtering process. Next, by use of a focused ion beam (FIB), a concentric circular groove constituting the third periodic surface pattern 40c was formed into a period length $P_3$ = 150 to 1050 nm, a depth of 100 nm, and a frequency of 10. A width of the groove was set to a half of one period. Thereafter, a micro circular opening having a diameter of 200 nm was formed in the center of the concentrically circular periodic surface pattern to thereby form the optical device 10 by FIB working.

To measure the transmission characteristics, first a light transmission spectrum was measured with respect to the device having a period length $P_3$ = 600 nm, and it was confirmed in the device including this constitution that a transmission peak appeared in the vicinity of about 650 nm. Next, semiconductor laser having a wavelength of 650 nm was used as a light source, and a light intensity in the vicinity of the opening was checked with respect to the optical device 10 whose period length $P_3$ was changed. The light intensity in the vicinity of the opening was measured in a position distant by about 20 nm from the opening by use of a near-field optical microscope. The center of the opening in the first surface was perpendicularly irradiated with laser light, and the luminous flux diameter in the irradiated face was set to about 12 $\mu$m.

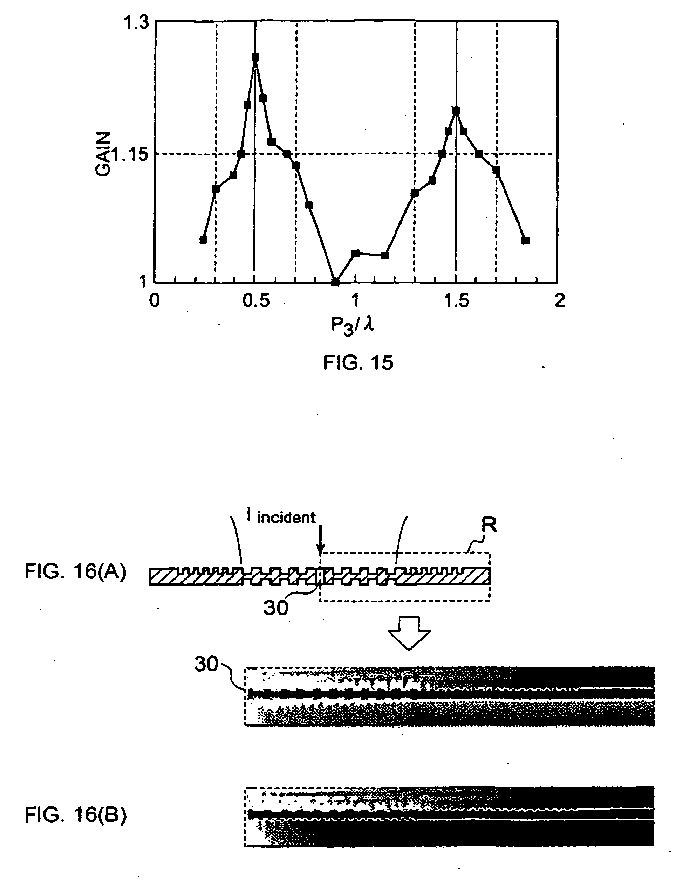

FIG. 15 shows a measurement result which is an enhancement factor of the light intensity with respect to the period length $P_3$ of the periodic surface pattern. Here, it is assumed that the abscissa of the drawing indicates a ratio of $P_3/\lambda$ of the period length $P_3$ of the periodic surface pattern with respect to the wavelength $\lambda$ (= 650 nm) of the incident light. The enhancement factor of the light intensity was calculated by the following equation:

Gain=Enhancement factor of light intensity =

(light intensity in position distant by about 20 nm from opening on emission side of device having periodic surface pattern)

/(light intensity in position distant by about 20 nm from opening on emission side of device having periodic length $P_3$ = 600 nm of periodic surface

pattern)        (Equation 9).

As shown in FIG. 15, the enhancement factor of the light intensity exhibits a remarkable increase, when a value of $P_3/\lambda$ corresponds to a value close to a value of 0.5 or 1.5, that is, a value close to the odd time(s) as much as 1/2 (regarded as a value which is substantially equal to odd time(s) as much as 1/2). When a deviation from the odd time (s) as much as 1/2 is large, an effect of enlargement rapidly decreases. However, when the value of $P_3/\lambda$ is within a range of $\pm$ 0.2 of odd time(s) as much as 0.5, a remarkable increase of the light intensity is obtained. A range of $P_3/\lambda$ in which the enhancement factor of the light intensity is 1.15 or more is 0.42 to 0.65 and 1.43 to 1.62. The enhancement factors of the light intensity at a time when the values of $_3/\lambda$ is 0.5 and 1.5 are 1.26 and 1.20, respectively. However, the wave number vector $k_{sp}$ of the surface plasmon polaritons coupled or Bragg-reflected by the periodic surface pattern with good efficiency slightly depends on not only the period length but also the groove depth or groove shape. Therefore, it is presumed that the value of $P_3/\lambda$ giving the maximum value of the enhancement factor of the light intensity might deviate slightly from the odd time(s) as much as 0.5.

The optical device of FIG. 11 is provided with the periodic surface pattern on the second surface only, and is not provided with the periodic surface pattern on the first surface, but as described above with reference to FIGS. 12 and 13, the first surface may be provided with the first and second periodic surface structures shown in FIG. 1 or 3. In FIGS. 12 and 13, the conductive thin film is not fixed to the substrate, but the conductive thin film can be deposited and formed on quartz. In this case, the period length $P_1$ of the first periodic surface pattern is described by the above equation 2 by use of a permittivity $\varepsilon_d$ (refractive index $n_d$ is $n_d = \varepsilon_d 1/2$) of the quartz substrate. FIG. 12 shows a case where the period length $P_2$ of the second periodic surface pattern is about $P_1/2$, but from a viewpoint of ease of preparing, the pattern may be formed so that $P_2$ is about $P_1 \cdot 3/2$ as shown in FIG. 13. To prepare the patterns, first the concentrically circular groove forming the first periodic surface pattern 40a is formed on the quartz substrate, and the concentrically circular groove forming the second periodic surface pattern 40b is formed externally from the first periodic surface pattern by a patterning process using a focused ion beam (FIB) or electron beam exposure. On the grooves, silver forming the conductive thin film 20 is formed into the film by a DC sputtering process. Furthermore, the concentrically circular groove forming the third periodic surface pattern 40c is formed on the surface of the film made of silver by the FIB. Finally, a micro opening may be formed in the center of the concentrically circular periodic surface pattern by use of the FIB.

On the other hand, the effect of the Bragg reflection by the third periodic surface pattern was confirmed by electromagnetic calculation. FIG. 16 shows distributions of absolute values of electric fields in the conventional structure of the third periodic surface pattern and the optical device of the present invention. However, it is assumed that the first surface is provided with the first and second periodic surface patterns of FIG. 1. Moreover, any substrate is not considered, and it is assumed that silver corresponding to the conductive thin film 20 is all surrounded with air. The period length $P_1$ of the first periodic surface pattern is 600 nm, the period length $P_2$ of the second periodic surface pattern is 300 nm, the period length of the third periodic surface pattern in the conventional structure is 600 nm, the period length $P_3$ of the third periodic surface pattern is 300 nm in the optical device of the present invention, and the wavelength $\lambda$ of the incident light is 650 nm. As an electric field distribution, there is shown an only one region (region R shown by a broken line in an upper part of FIG. 16(A)) by use of the opening 30 as a symmetric face. It can be visually confirmed from FIG. 16(A) that the energy is scattered externally from the third periodic surface pattern, and further diffracted light is emitted in a perpendicular direction of the third periodic surface pattern in a case where the third periodic surface pattern has the conventional structure. However, it can be visually confirmed that the energy is inhibited from being scattered and the periodic surface pattern is inhibited from being emitted in the perpendicular direction by the third periodic surface pattern in the optical device of the present invention of FIG. 16(B).

In the present embodiment, there has been described an example in which the opening is circular, but the present invention is not limited to this embodiment. For example, the opening can be formed into a slit shape, a rectangular shape, an elliptical shape or the like.

As described above, according to the present embodiment, the periodic surface pattern is disposed on an emission face side, and the period length is set to be substantially equal to odd time(s) as much as 1/2 of the value $\lambda/nd$

obtained by dividing the wavelength $\lambda$ of the transmitted light by the effective refractive index $n_d$ of the medium adjacent to the emission face in the optical device provided with the conductive thin film including at least one opening and the periodic surface pattern disposed on at least one surface. Consequently, the energy scatted externally from the opening on the emission face side can be Bragg-reflected by the periodic surface pattern with good efficiency to thereby realize high-efficiency light transmission.

Moreover, according to the present embodiment, assuming that the wavelength of the light to be transmitted is $\lambda$, the permittivity of the conductive thin film is $\varepsilon_m$, and the permittivity of the medium substantially adjacent to the emission face is $\varepsilon_d$, the period length of the periodic surface pattern is set to be substantially equal to odd time(s) as much as 1/2 of $\lambda/(\varepsilon_m \bullet \varepsilon_d/(\varepsilon_m+\varepsilon_d))^{1/2}$. In consequence, a similar effect is obtained.

(Embodiment 3)

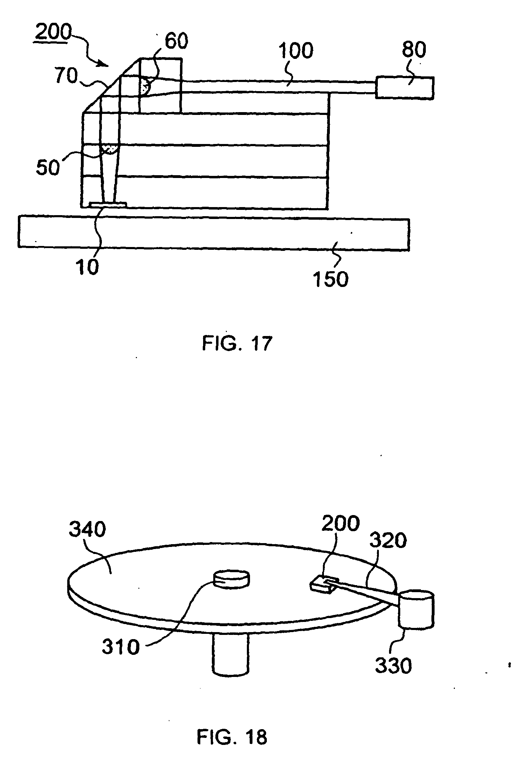

FIG. 17 shows one embodiment of an optical head constituted using an optical device of the present invention.

An "optical recording medium" used in description of the present embodiment means an arbitrary medium with respect to which data is written or read using light, but the present invention is not limited to a phase change medium, a magnetic optical medium, and a dyestuff medium. When the medium is a magnetic optical medium, writing is optically performed, and reading is performed magnetically, not optically in some case.

An optical head 200 in FIG. 17 is formed into a slider shape for floating the optical head at a predetermined height by rotation of an optical recording medium 150. Laser light emitted from laser 80 is introduced via an optical fiber 100, and collimated by disposing a collimator lens 60 constituted of a micro lens. Furthermore, the collimated light changes its optical path at right angles by a total reflection mirror 70, and the light is further guided to the optical device 10 of the present embodiment by a focus lens 50 disposed under the mirror.

Next, there will be described one embodiment of an optical recording and reconstructing device using an optical head of the present invention.

FIG. 18 shows the optical recording and reconstructing device. The optical recording and reconstructing device has: an optical recording medium 340 which rotates by a rotation shaft 310; a suspension 320 which rotatably supports the optical head 200 (the optical fiber 100 and the laser 80 are not shown) centering on the rotation shaft; and a head actuator 330 which rotates the suspension 320. When the optical recording medium 340 is rotated at a high speed, the optical head 200 positioned in a tip of the suspension 320 floats, the head runs while a distance between the surface of the optical device 10 and the optical recording medium 340 is kept at 100 nm or less, and it is possible to record the information with a density which is higher than ever.

To reproduce the information recorded in the optical recording medium, when a photo detector is formed on the surface of the optical device 10 on the side of the optical recording medium, reflected light can be read from the medium in the optical head of FIG. 17.

Moreover, there is also possible a method in which the optical head of the present invention is constituted as a write-only head, a reproduction head is disposed facing this optical recording head with the medium being sandwiched between the heads, and the transmitted light of the medium is detected. A leak magnetic flux from the medium can be reproduced by the head using a magnetoresistive effect by use of a magnetic optical recording medium as an optical recording medium.

Furthermore, when the optical device of the present invention is used, it is possible to apply the device broadly to nano photonics such as a condensing device for condensing only light having a specific wavelength, and a near-field optical microscope.

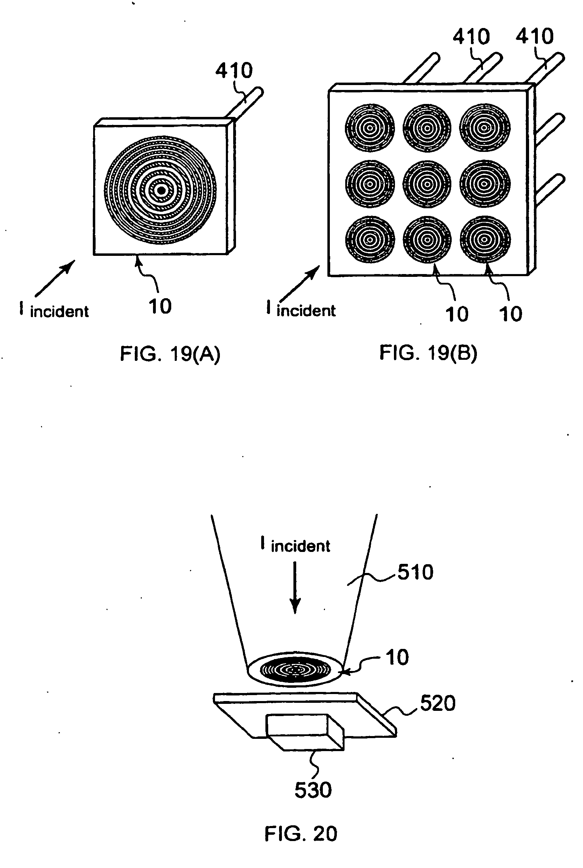

FIGS. 19(A) and (B) show embodiments of the condensing device for condensing the only light having the specific wavelength by use of the optical device of the present invention. The light allowed to fall on the optical device 10 of the present invention passes through one or a plurality of openings, and is introduced into one or a plurality of optical fibers 410 disposed so as to communicate with the opening. That is, the optical device 10 of the present invention functions as a condenser, and the light is coupled to the optical fibers 410 with good efficiency.

FIG. 20 shows one embodiment of a near-field optical microscope of the present invention. The optical device 10 for use in the shown near-field optical microscope is disposed in a tip of a probe 510 for the near-field optical microscope. The light allowed to fall on the probe 510 passes through the opening of the 10, a sample 520 is irradiated with the light, and the light is detected by a photo detector 530. That is, when the sample is irradiated with the light intensified by the optical device 10 of the present invention, high-resolution high-sensitivity detection is possible.

There have been described and shown above various types of optical devices in a certain type of application, but alterations and modifications are possible as long as the devices do not depart from broad contents of the present invention which are limited only by the appended claims.

**Claims**

1.  An optical device comprising: a conductive thin film (20) having first and second surfaces (20a, 20b); at least one opening (30) extending through the film from the first surface (20a) to the second surface (20b), and a periodic surface pattern disposed on at least one of the first and second surfaces (20a, 20b), an intensity of light falling on the first surface (20a) and transmitted to the second surface (20b) through the opening (30) being increased as compared with a case where any periodic surface pattern is not disposed,
    **characterized in that** the periodic surface pattern includes first and second periodic surface patterns (40a, 40b) having different period lengths, and the period length of the second periodic surface pattern (40b) is substantially equal to an odd number of half periods
    of the period length of the first periodic surface pattern (40a).

2.  An optical device according to claim 1, wherein
    surface plasmon polaritons excited by the first periodic surface pattern (40a) undergo odd-order Bragg reflection by the second periodic surface pattern (40b)

3.  The optical device according to claim 1, wherein a ratio $P_2/P_1$ of a period length $P_2$ of the second periodic surface pattern (40b) with respect to a period length $P_1$ of the first periodic surface pattern (40a) is within a range of

    $$\frac{N}{2} \pm 0.2,$$ wherein N is an odd number.

4.  The optical device according to claim 1, wherein a ratio $P_2/P_1$ of a period length $P_2$ of the second periodic surface pattern (40b) with respect to a period length $P_1$ of the first periodic surface pattern (40a) is within a range of $0.5 \pm 0.2$.

5.  The optical device according to claim 1, wherein a ratio $P_2/P_1$ of a period length $P_2$ of the second periodic surface pattern (40b) with respect to a period length $P_1$ of the first periodic surface pattern (40a) is within a range of $1.5 \pm 0.2$.

6.  The optical device according to claim 1, wherein the intensity of the light transmitted through the opening (30) increases by 20% or more as compared with that of light transmitted through an opening of a device which is not provided with the second periodic surface pattern (40b).

7.  The optical device according to claim 2, wherein the intensity of the light transmitted through the opening (30) increases by 20% or more as compared with that of light transmitted through an opening of a device which is not provided with the second periodic surface pattern (40b).

8.  The optical device according to claim 1, wherein the first and second periodic surface patterns (40a, 40b) are disposed on the same plane as the first or second surface (20a, 20b).

9.  The optical device according to claim 2, wherein the first and second periodic surface patterns (40a, 40b) are disposed on the same plane as the first or second surface (20a, 20b).

10. The optical device according to claim 1, wherein the first periodic surface patterns (40a) is disposed so as to correspond to a region on which the light falls, and the second periodic surface pattern (40b) is disposed externally from the first periodic surface pattern (40a).

11. The optical device according to claim 2, wherein the first periodic surface pattern (40a) is disposed so as to correspond to a region on which the light falls, and the second periodic surface pattern (40b) is disposed externally from the first periodic surface pattern (40a).

12. The optical device according to claim 10, wherein the region provided with the first periodic surface pattern (40a) is broader than the region on which the light falls.

13. The optical device according to claim 11, wherein the region provided with the first periodic surface pattern (40a) is broader than the region on which the light falls.

14. An optical device comprising: a conductive thin film (20) having first and second surfaces (20a, 20b) and a plurality of first periodically, arranged openings (30) extending through the film from the first surface (20a) to the second surface (20b), an intensity of light falling on the first surface (20a) and transmitted to the second surface (20b) through the plurality of first openings (30) being increased as compared with a case where the plurality of first openings are not periodically arranged,

**characterized in that** the conductive thin film (20) further includes either second periodic openings (31) or periodic surface patterns (40b) formed, around the first periodic openings, with a period length which is different from that of the first periodic openings, the second periodic openings (31) being different from the plurality of first openings (30) extending through the film from the first surface (20a) to the second surface (20b), the periodic surface patterns being formed on one of the first and second surfaces (20a, 20b), and

the period length of the second periodic openings (31) or the periodic surface patterns is substantially equal to an odd number of half periods of the period length of the first periodic openings.

15. An optical device according to claim 14, wherein
surface plasmon polaritons excited by the first periodic openings undergo odd-order Bragg reflection by the second periodic openings (31) or the periodic surface patterns (40b).

16. The optical device according to claim 14, wherein a ratio $P_2/P_1$ of a period length $P_2$ of the second periodic openings (31) or the periodic surface patterns (40b) with respect to a period length $P_1$ of the first periodic openings is within a range of $\frac{N}{2} \pm 0.2$ , wherein N is an odd number.

17. The optical device according to claim 14, wherein a ratio $P_2/P_1$ of a period length $P_2$ of the second periodic openings (31) or the periodic surface patterns (40b) with respect to a period length $P_1$ of the first periodic openings is within a range of $0.5 \pm 0.2$.

18. The optical device according to claim 14, wherein a ratio $P_2/P_1$ of a period length $P_2$ of the second periodic openings (31) or the periodic surface patterns (40b) with respect to a period length $P_1$ of the first periodic openings is within a range of $1.5 \pm 0.2$.

19. The optical device according to claim 14, wherein the intensity of the light transmitted through the first periodic openings increases by 20% or more as compared with that of the light transmitted through periodic openings of a device which is not provided with the second periodic openings (31) or the periodic surface patterns (40b).

20. The optical device according to claim 15, wherein the intensity of the light transmitted through the first periodic openings increases by 20% or more as compared with that of light transmitted through periodic openings of a device which is not provided with the second periodic openings (31) or the periodic surface patterns (40b).

21. The optical device according to claim 14, wherein the first periodic openings are disposed so as to correspond to a region on which light falls, and the second periodic openings (31) or the periodic surface patterns (40b) are disposed externally from the first periodic openings.

22. The optical device according to claim 15, wherein the first periodic openings are disposed so as to correspond to a region on which light falls, and the second periodic openings (31) or the periodic surface patterns (40b) are disposed externally from the first periodic openings.

23. The optical device according to claim 14, wherein a region provided with the first periodic openings is broader than the region on which light falls.

24. The optical device according to claim 15, wherein a region provided with the first periodic openings is broader than the region on which light falls.

25. An optical device according to claim 1, wherein
the first and second periodic surface patterns (40a, 40b) are disposed on the first surface (20a), and a third periodic surface patter (40c) is disposed on the second surface (20b), and

the period length of the third periodic surface pattern (40c) is substantially equal to $\frac{N}{2}$ of a value $\lambda/n_d$ obtained by dividing a wavelength $\lambda$ of the transmitted light whose intensity is increased by an effective refractive index $n_d$ of a medium substantially adjacent to the second surface (20b), wherein N is an odd number.

26. An optical device according to claim 1, wherein
the first and second periodic surface patterns (40a, 40b) are disposed on the first surface (20a),
and a third periodic surface pattern (40c) is disposed on the second surface (20b), and
assuming that a wavelength of the transmitted light whose intensity is increased is $\lambda$, a permittivity of the conductive thin film is $\varepsilon_m$, and a permittivity of a medium substantially adjacent to the second surface (20b) is $\varepsilon_d$, the period length of the third periodic surface pattern (40c) is substantially equal to $\frac{N}{2}$ of $\lambda/(\varepsilon_m \cdot \varepsilon_d/(\varepsilon_m+\varepsilon_d))^{1/2}$, wherein N is an odd number.

27. An optical device according to claim 1,
wherein the first and second periodic surface patterns (40a, 40b) are disposed on the first surface (20a), and a third periodic surface pattern (40c) is disposed on the second surface (20b),
surface plasmon polaritons excited by the first periodic surface pattern (40a) undergo odd-order Bragg reflection by the second periodic surface pattern (40b), and
surface plasmon polaritons in the third periodic surface pattern (40c) undergo odd-order Bragg reflection in the third periodic surface pattern (40c).

28. The optical device according to claim 25, wherein a ratio $P_2/P_1$ of a period length $P_2$ of the second periodic surface pattern (40b) with respect to a period length $P_1$ of the first periodic surface pattern (40a) is within a range of $\frac{N}{2} \pm 0.2$ , and a ratio $P_3/(\lambda/n_d)$ between a period length $P_3$ of the third periodic surface pattern (40c) and a value $\lambda/n_d$ obtained by dividing the wavelength $\lambda$ of the transmitted light whose intensity is increased by the effective refractive index $n_d$ of the medium substantially adjacent to the second surface (20b) is within a range of $\frac{N}{2} \pm 0.2$, wherein N is an odd number.

29. The optical device according to claim 26, wherein a ratio $P_2/P_1$ of a period length $P_2$ of the second periodic surface pattern (40b) with respect to a period length $P_1$ of the first periodic surface pattern (40a) is within a range of $\frac{N}{2} \pm 0.2$, and assuming that the wavelength of the transmitted light whose intensity is increased is $\lambda$, the permittivity of the conductive thin film is $\varepsilon_m$, and the permittivity of the medium substantially adjacent to the second surface (20b) is $\varepsilon_d$, a relation formula of the period length $P_3$ of the third periodic surface pattern (40c) $P_3/(\lambda/(\varepsilon_m \cdot \varepsilon_d/(\varepsilon_m+\varepsilon_d))^{1/2})$ may be within the range of $\frac{N}{2} \pm 0.2$, wherein N is an odd number.

30. The optical device according to claim 25, wherein a ratio $P_2/P_1$ of a period length $P_2$ of the second periodic surface pattern (40b) with respect to a period length $P_1$ of the first periodic surface pattern (40a) is within a range of $0.5 \pm 0.2$, and a ratio $P_3/(\lambda/n_d)$ between a period length $P_3$ of the third periodic surface pattern (40c) and a value $\lambda/n_d$ obtained by dividing the wavelength $\lambda$ of the transmitted light whose intensity is increased by the effective refractive index $n_d$ of the medium substantially adjacent to the second surface (20b) is within a range of $0.5 \pm 0.2$.

31. The optical device according to claim 26, wherein a ratio $P_2/P_1$ of a period length $P_2$ of the second periodic surface pattern (40b) with respect to a period length $P_1$ of the first periodic surface pattern (40a) is within a range of 0.5 0.2, and assuming that the wavelength of the transmitted light whose intensity is increased is $\lambda$, the permittivity of the conductive thin film is $\varepsilon_m$, and the permittivity of the medium substantially adjacent to the second surface (20b) is $\varepsilon_d$, a relation formula of the period length $P_3$ of the third periodic surface pattern (40c) $P_3/(\lambda/(\varepsilon m \cdot \varepsilon_d/(\varepsilon_m+\varepsilon_d))^{1/2})$ may be within a range of $0.5 \pm 0.2$.

32. The optical device according to claim 25, wherein a ratio $P_2/P_1$ of a period length $P_2$ of the second periodic surface pattern (40b) with respect to a period length $P_1$ of the first periodic surface pattern (40a) is within a range of $1.5 \pm 0.2$, and a ratio $P_3/(\lambda/n_d)$ between a period length $P_3$ of the third periodic surface pattern (40c) and a value $\lambda/n_d$ obtained by dividing the wavelength $\lambda$ of the transmitted light whose intensity is increased by the effective refractive index $n_d$ of the medium substantially adjacent to the second surface (20b) is within a range of $1.5 \pm 0.2$.

33. The optical device according to claim 26, wherein a ratio $P_2/P_1$ of a period length $P_2$ of the second periodic surface pattern (40b) with respect to a period length $P_1$ of the first periodic surface pattern (40a) is within a range of $1.5 \pm 0.2$, and assuming that the wavelength of the transmitted light whose intensity is increased is $\lambda$, the permittivity of the conductive thin film is $\varepsilon_m$, and the permittivity of the medium substantially adjacent to the second surface (20b) is $\varepsilon_d$, a relation formula of the period length $P_3$ of the third periodic surface pattern (40c) $P_3/(\lambda/(\varepsilon_m \cdot \varepsilon_d/(\varepsilon_m + \varepsilon_d))^{1/2}$ may be within a range of $1.5 \pm 0.2$.

34. The optical device according to claim 2, wherein an opening diameter of the opening (30) is smaller than a wavelength of the incident light.

35. The optical device according to claim 15, wherein an opening diameter of the opening (30) is smaller than a wavelength of the incident light.

36. The optical device according to claim 27, wherein an opening diameter of the opening (30) is smaller than a wavelength of the incident light.

37. The optical device according to claim 2, wherein the periodic surface pattern is formed into a concentrically circular shape.

38. The optical device according to claim 15, wherein the periodic surface pattern is formed into a concentrically circular shape.

39. The optical device according to claim 27, wherein the periodic surface pattern is formed into a concentrically circular shape.

40. The optical device according to claim 2, wherein the periodic surface pattern is periodically disposed centering on the opening.

41. The optical device according to claim 15, wherein the periodic surface pattern is periodically disposed centering on the opening.

42. The optical device according to claim 27, wherein the periodic surface pattern is periodically disposed centering on the opening (30).

43. An optical head which records information in an optical recording medium by light from a light source, the optical head comprising: waveguide means for guiding the output light of the light source; condenser means for condensing the light guided by the waveguide means; and an optical device according to claim 2 which irradiates the optical recording medium with a part of the light condensed by the condenser means.

44. An optical head which records information in an optical recording medium by light from a light source, the optical head comprising: waveguide means (100) for guiding the output light of the light source; condenser means for condensing the light guided by the waveguide means (100); and an optical device according to claim 15 which irradiates the optical recording medium with a part of the light condensed by the condenser means.

45. An optical head which records information in an optical recording medium (150) by light from a light source, the optical head comprising: waveguide means (100) for guiding the output light of the light source; condenser means for condensing the light guided by the waveguide means (100); and an optical device according to claim 27 which irradiates the optical recording medium (150) with a part of the light condensed by the condenser means.

46. An optical recording device comprising: an optical head (200) which records information in an optical recording medium (150) by light from a light source,
the optical head (200) comprising: waveguide means (100) for guiding the output light of the light source; condenser means for condensing the light guided by the waveguide means (100); and an optical device according to claim 2 which irradiates the optical recording medium (150) with a part of the light condensed by the condenser means.

47. An optical recording device comprising: an optical head (200) which records information in an optical recording medium (150) by light from a light source,
the optical head (200) comprising: waveguide means (100) for guiding the output light of the light source; condenser means for condensing the light guided by the waveguide means (100); and an optical device according to claim 15 which irradiates the optical recording medium (150) with a part of the light condensed by the condenser means.

**48.** An optical recording device comprising: an optical head (200) which records information in an optical recording medium (150) by light from a light source,
the optical head (200) comprising: waveguide means (100) for guiding the output light of the light source; condenser means for condensing the light guided by the waveguide means (100); and an optical device according to claim 27 which irradiates the optical recording medium (150) with a part of the light condensed by the condenser means.

**49.** A condensing device which condenses only light having a specific wavelength from light from a light source, comprising:

an optical device according to claim 2.

**50.** A condensing device which condenses only light having a specific wavelength from light from a light source, comprising:

an optical device according to claim 15.

**51.** A condensing device which condenses only light having a specific wavelength from light from a light source, comprising:

an optical device according to claim 27.

**52.** A near-field optical microscope comprising:

an optical device according to claim 2 which condenses only light having a specific wavelength from light from a light source; and
detection means for receiving the light emitted by the optical device.

**53.** A near-field optical microscope comprising:

an optical device according to claim 15 which condenses only light having a specific wavelength from light from a light source; and
detection means (530) for receiving the light emitted by the optical device.

**54.** A near-field optical microscope comprising:

an optical device according to claim 27 which condenses only light having a specific wavelength from light from a light source; and
detection means (530) for receiving the light emitted by the optical device.

## Patentansprüche

**1.** Optische Vorrichtung mit: einem leitfähigen Dünnfilm (20), der erste und zweite Oberflächen (20a, 20b) aufweist; mindestens einer Öffnung (30), die sich durch den Film von der ersten Oberfläche (20a) zu der zweiten Oberfläche (20b) erstreckt; und einem periodischen Oberflächenmuster, das auf mindestens einer der ersten und zweiten Oberflächen (20a, 20b) angeordnet ist, wobei eine Intensität von Licht, das auf die erste Oberfläche (20a) fällt und zu der zweiten Oberfläche (20b) durch die Öffnung (30) übertragen wird, vergrössert wird verglichen mit einem Fall, wo kein periodisches Oberflächenmuster angeordnet ist,
**dadurch gekennzeichnet, dass** das periodische Oberflächenmuster erste und zweite periodische Oberflächenmuster (40a, 40b) umfasst, die unterschiedliche Periodenlängen aufweisen, und die Periodenlänge des zweiten periodischen Oberflächenmusters (40b) im wesentlichen gleich einer ungeraden Anzahl von halben Perioden der Periodenlänge des ersten periodischen Oberflächenmusters (40a) ist.

**2.** Optische Vorrichtung gemäß Anspruch 1, wobei Oberflächenplasmon-Polaritonen, die durch das erste periodische Oberflächenmuster (40a) angeregt werden, eine Bragg-Reflexion ungerader Ordnung durch das zweite periodische Oberflächenmuster (40b) erfahren.

**3.** Optische Vorrichtung gemäß Anspruch 1, wobei ein Verhältnis $P_2/P_1$ einer Periodenlänge $P_2$ des zweiten periodischen Oberflächenmusters (40b) hinsichtlich einer Periodenlänge $P_1$ des ersten periodischen Oberflächenmusters (40a) innerhalb eines Bereichs von $\dfrac{N}{2} \pm 0{,}2$, liegt, wobei N eine ungerade Zahl ist.

**4.** Optische Vorrichtung gemäß Anspruch 1, wobei ein Verhältnis $P_2/P_1$ einer Periodenlänge $P_2$ des zweiten periodischen Oberflächenmusters (40b) hinsichtlich einer Periodenlänge $P_1$ des ersten periodischen Oberflächenmusters (40a) innerhalb eines Bereiches von $0{,}5 \pm 0{,}2$ ist.

**5.** Optische Vorrichtung gemäß Anspruch 1, wobei ein Verhältnis $P_2/P_1$ einer Periodenlänge $P_2$ des zweiten periodischen Oberflächenmusters (40b) hinsichtlich einer Periodenlänge $P_1$ des ersten periodischen Oberflächenmusters (40a) innerhalb eines Bereiches von $1{,}5 \pm 0{,}2$ ist.

**6.** Optische Vorrichtung gemäß Anspruch 1, wobei die Intensität des Lichts, dass durch die Öffnung übertragen wird, um 20% oder mehr zunimmt, verglichen mit jener von Licht, das durch eine Öffnung einer Vorrichtung übertragen wird, die nicht mit dem zweiten periodischen Oberflächenmuster (40b) versehen ist.

**7.** Optische Vorrichtung gemäß Anspruch 2, wobei die Intensität des Lichts, das durch die Öffnung übertragen wird, um 20% oder mehr zunimmt, verglichen mit jener von Licht, das durch eine Öffnung einer Vorrichtung übertragen wird, die nicht mit dem zweiten periodischen Oberflächenmuster (40b) versehen ist.

**8.** Optische Vorrichtung gemäß Anspruch 1, wobei die ersten und zweiten periodischen Oberflächenmuster (40a, 40b) auf der selben Ebene wie die erste oder zweite Oberfläche (20a, 20b) angeordnet sind.

**9.** Optische Vorrichtung gemäß Anspruch 2, wobei die ersten und zweiten periodischen Oberflächenmuster (40a, 40b) auf der selben Ebene wie die erste oder zweite Oberfläche (20a, 20b) angeordnet sind.

**10.** Optische Vorrichtung gemäß Anspruch 1, wobei das erste periodische Oberflächenmuster (40a) so angeordnet ist, dass es einem Bereich entspricht, auf den das Licht fällt, und das zweite periodische Oberflächenmuster (40b) extern von dem ersten periodischen Oberflächenmuster (40a) angeordnet ist.

**11.** Optische Vorrichtung gemäß Anspruch 2, wobei das erste periodische Oberflächenmuster (40a) so angeordnet ist, dass es einem Bereich entspricht, auf den das Licht fällt, und das zweite periodische Oberflächenmuster (40b) extern von dem ersten periodischen Oberflächenmuster (40a) angeordnet ist.

**12.** Optische Vorrichtung gemäß Anspruch 10, wobei der Bereich, der mit dem ersten periodischen Oberflächenmuster (40a) versehen ist, breiter ist als der Bereich, auf den das Licht fällt.

**13.** Optische Vorrichtung gemäß Anspruch 11, wobei der Bereich, der mit dem ersten periodischen Oberflächenmuster (40a) versehen ist, breiter ist als der Bereich, auf den das Licht fällt.

**14.** Optische Vorrichtung mit: einem leitfähigen Dünnfilm (20), der erste und zweite Oberflächen (20a, 20b) aufweist; und einer Anzahl von ersten periodisch angeordneten Öffnungen (30), die sich durch den Film von der ersten Oberfläche (20a) zu der zweiten Oberfläche (20b) erstrecken, wobei eine Intensität von Licht, das auf die erste Oberfläche (20a) fällt und zu der zweiten Oberfläche (20b) durch die Anzahl von ersten Öffnungen (30) übertragen wird, vergrößert wird, verglichen mit einem Fall, wo die Anzahl von ersten Öffnungen nicht periodisch angeordnet sind, **dadurch gekennzeichnet, dass** der leitfähige Dünnfilm (20) weiterhin entweder zweite periodische Öffnungen (31) oder periodische Oberflächenmuster (40b) aufweist, die um die ersten periodischen Öffnungen mit einer Periodenlänge gebildet sind, die sich von jener der ersten periodischen Öffnungen unterscheidet, wobei die zweiten periodischen Öffnungen (31) sich von der Anzahl von ersten Öffnungen (30), die sich durch den Film von der ersten Oberfläche (20a) zu der zweiten Oberfläche (20b) erstrecken, unterscheiden, die periodischen Oberflächenmuster auf einer der ersten und zweiten Oberflächen (20a, 20b) gebildet sind und

die Periodenlänge der zweiten periodischen Öffnungen (31) oder der periodischen Oberflächenmuster im wesentlichen gleich einer ungeraden Zahl von halben Perioden der Periodenlänge der ersten periodischen Öffnungen ist.

15. Optische Vorrichtung gemäß Anspruch 14, wobei Oberflächenplasmon-Polaritonen, die durch die ersten periodischen Öffnungen angeregt werden, eine Bragg-Reflexion ungerader Ordnung durch die zweiten periodischen Öffnungen (31) oder die periodischen Oberflächenmuster (40b) eingehen.

16. Optische Vorrichtung gemäß Anspruch 14, wobei ein Verhältnis $P_2/P_1$ einer Periodenlänge $P_2$ der zweiten periodischen Öffnungen (31) oder der periodischen Oberflächenmuster (40b) hinsichtlich einer Periodenlänge $P_1$ der ersten

periodischen Öffnungen innerhalb eines Bereiches von $\dfrac{N}{2} \pm 0{,}2,$ liegt, wobei N eine ungerade Zahl ist.

17. Optische Vorrichtung gemäß Anspruch 14, wobei ein Verhältnis $P_2/P_1$ einer Periodenlänge $P_2$ der zweiten periodischen Öffnungen (31) oder der periodischen Oberflächenmuster (40b) hinsichtlich einer Periodenlänge $P_1$ der ersten periodischen Öffnungen innerhalb eines Bereiches von $0{,}5 \pm 0{,}2$ ist.

18. Optische Vorrichtung gemäß Anspruch 14, wobei ein Verhältnis $P_2/P_1$ einer Periodenlänge $P_2$ der zweiten periodischen Öffnungen (31) oder der periodischen Oberflächenmuster (40b) hinsichtlich einer Periodenlänge $P_1$ der ersten periodischen Öffnungen innerhalb eines Bereiches von $1{,}5 \pm 0{,}2$ ist.

19. Optische Vorrichtung gemäß Anspruch 14, wobei die Intensität des Lichts, das durch die ersten periodischen Öffnungen übertragen wird, um 20% oder mehr zunimmt, verglichen mit jener des Lichts, das durch periodische Öffnungen einer Vorrichtung übertragen wird, die nicht mit den zweiten periodischen Öffnungen (31) oder den periodischen Oberflächenmustern (40b) versehen ist.

20. Optische Vorrichtung gemäß Anspruch 15, wobei die Intensität des Lichts, das durch die ersten periodischen Öffnungen übertragen wird, um 20% oder mehr zunimmt, verglichen mit jener des Lichts, dass durch periodische Öffnungen einer Vorrichtung übertragen wird, die nicht mit den zweiten periodischen Öffnungen (31) oder den periodischen Oberflächenmustern (40b) versehen ist.

21. Optische Vorrichtung gemäß Anspruch 14, wobei die ersten periodischen Öffnungen so angeordnet sind, dass sie einem Bereich entsprechen, auf den Licht fällt, und die zweiten periodischen Öffnungen (31) oder die periodischen Oberflächenmuster (40b) extern von den ersten periodischen Öffnungen angeordnet sind.

22. Optische Vorrichtung gemäß Anspruch 15, wobei die ersten periodischen Öffnungen so angeordnet sind, dass sie einem Bereich entsprechen, auf den Licht fällt, und die zweiten periodischen Öffnungen (31) oder die periodischen Oberflächenmuster (40b) extern von den ersten periodischen Öffnungen angeordnet sind.

23. Optische Vorrichtung gemäß Anspruch 14, wobei ein Bereich, der mit den ersten periodischen Öffnungen versehen ist, breiter ist als der Bereich, auf den Licht fällt.

24. Optische Vorrichtung gemäß Anspruch 15, wobei ein Bereich, der mit den ersten periodischen Öffnungen versehen ist, breiter ist als der Bereich, auf den Licht fällt.

25. Optische Vorrichtung gemäß Anspruch 1, wobei die ersten und zweiten periodischen Oberflächenmuster (40a, 40b) auf der ersten Oberfläche (20a) angeordnet sind und ein drittes periodisches Oberflächenmuster (40c) auf der zweiten Oberfläche (20b) angeordnet ist und

die Periodenlänge des dritten periodischen Oberflächenmusters (40c) im wesentlichen gleich $\dfrac{N}{2}$ eines Wertes $\lambda/n_d$ ist, der durch Teilen einer Wellenlänge $\lambda$ des übertragenen Lichts, dessen Intensität gesteigert wird, durch einen wirksamen Brechungsindex $n_d$ eines Mediums, das im wesentlichen angrenzend an die zweite Oberfläche (20b) ist, erhalten wird, wobei N eine ungerade Zahl ist.

26. Optische Vorrichtung gemäß Anspruch 1, wobei die ersten und zweiten periodischen Oberflächenmuster (40a, 40b) auf der ersten Oberfläche (20a) angeordnet sind und ein drittes periodisches Oberflächenmuster (40c) auf der zweiten Oberfläche (20b) angeordnet ist und

unter der Annahme, dass eine Wellenlänge des übertragenen Lichts, dessen Intensität gesteigert wird, $\lambda$ ist, eine Permittivität des leitfähigen Dünnfilms $\varepsilon_m$ ist und eine Permittivität eines Mediums, das im wesentlichen an die zweite Oberfläche (20b) angrenzt, $\varepsilon_d$ ist, die Periodenlänge des dritten periodischen Oberflächenmusters (40c) im wesentlichen gleich $\dfrac{N}{2}$ von $\lambda/(\varepsilon_m\cdot\varepsilon_d/(\varepsilon_m+\varepsilon_d))^{1/2}$ ist, wobei N eine ungerade Zahl ist.

27. Optische Vorrichtung gemäß Anspruch 1, wobei die ersten und zweiten periodischen Oberflächenmuster (40a, 40b) auf der ersten Oberfläche (20a) angeordnet sind und ein drittes periodisches Oberflächenmuster (40c) auf der zweiten Oberfläche (20b) angeordnet ist,
Oberlächenplasmom-Polaritonen, die durch das erste periodische Oberflächenmuster (40a) angeregt werden, eine Bragg-Reflexion gerader Ordnung durch das zweite periodische Oberflächenmuster (40b) eingehen, und Oberflächenplasmon-Polaritonen in dem dritten periodischen Oberflächenmuster (40c) eine Bragg-Reflexion ungerader Ordnung in dem dritten periodischen Oberflächenmuster (40c) eingehen.

28. Optische Vorrichtung gemäß Anspruch 25, wobei ein Verhältnis $P_2/P_1$ einer Periodenlänge $P_2$ des zweiten periodischen Oberflächenmusters (40b) hinsichtlich einer Periodenlänge $P_1$ des ersten periodischen Oberflächenmusters (40a) innerhalb eines-Bereiches von $\dfrac{N}{2} \pm 0{,}2$, und ein Verhältnis $P_3/(\lambda/n_d)$ zwischen einer Periodenlänge $P_3$ des dritten periodischen Oberflächenmusters (40c) und eines Wertes $\lambda/n_d$, der durch Teilen der Wellenlänge $\lambda$ des übertragenen Lichts, dessen Intensität gesteigert wird, durch den wirksamen Brechungsindex $n_d$ des Mediums, das im wesentlichen an die zweite Oberfläche (20b) angrenzt, erhalten wird, innerhalb eines Bereiches von $\dfrac{N}{2} \pm 0{,}2$, ist, wobei N eine ungerade Zahl ist.

29. Optische Vorrichtung gemäß Anspruch 26, wobei ein Verhältnis $P_2/P_1$ einer Periodenlänge $P_2$ des zweiten periodischen Oberflächenmusters (40b) hinsichtlich einer Periodenlänge $P_1$ des ersten periodischen Oberflächenmusters (40a) innerhalb eines Bereiches von $\dfrac{N}{2} \pm 0{,}2$, ist, und unter der Annahme das die Wellenlänge des übertragenen Lichts, dessen Intensität erhöht wird, $\lambda$ ist, die Permittivität des leitfähigen Dünnfilms $\varepsilon_m$ ist und die Permittivität des Mediums, das im wesentlichen an die zweite Oberfläche (20b) angrenzend ist, $\varepsilon_d$ ist, eine Verhältnisformel der Periodenlänge $P_3$ des dritten periodischen Oberflächenmusters (40c) $P_3/(\lambda/(\varepsilon_m\cdot\varepsilon_d/(\varepsilon_m+\varepsilon_d))^{1/2})$ innerhalb des Bereichs $\dfrac{N}{2} \pm 0{,}2$ sein kann, wobei N eine ungerade Zahl ist.

30. Optische Vorrichtung gemäß Anspruch 25, wobei ein Verhältnis $P_2/P_1$ einer Periodenlänge $P_2$ des zweiten periodischen Oberflächenmusters (40b) hinsichtlich einer Periodenlänge $P_1$ des ersten periodischen Oberflächenmusters (40a) innerhalb eines Bereiches von $0{,}5 \pm 0{,}2$ ist und ein Verhältnis $P_3/(\lambda/n_d)$ zwischen einer Periodenlänge $P_3$ des dritten periodischen Oberflächenmusters (40c) und eines Wertes $\lambda/n_d$, der durch Teilen der Wellenlänge $\lambda$ des übertragenen Lichts, dessen Intensität gesteigert wird, durch den wirksamen Brechungsindex $n_d$ des Mediums, das im wesentlichen an die zweite Oberfläche (20b) angrenzend ist, erhalten wird, innerhalb eines Bereiches von $0{,}5 \pm 0{,}2$ ist.

31. Optische Vorrichtung gemäß Anspruch 26, wobei ein Verhältnis $P_2/P_1$ einer Periodenlänge $P_2$ des zweiten periodischen Oberflächenmusters (40b) hinsichtlich einer Periodenlänge $P_1$ des ersten periodischen Oberflächenmusters (40a) innerhalb eines Bereiches von $0{,}5 \pm 0{,}2$, ist, und unter der Annahme, dass die Wellenlänge des übertragenen Lichts, dessen Intensität erhöht wird, $\lambda$ ist, die Permittivität des leitfähigen Dünnfilms $\varepsilon_m$ ist und die Permittivität des Mediums, das im wesentlichen an die zweite Oberfläche (20b) angrenzend ist, $\varepsilon_d$ ist, eine Verhältnisformel der Periodenlänge $P_3$ des dritten periodischen Oberflächenmusters (40c) $P_3/(\lambda/(\varepsilon_m\cdot\varepsilon_d/(\varepsilon_m+\varepsilon_d))^{1/2})$ innerhalb eines Be-

reichs von 0,5 ± 0,2 sein kann.

32. Optische Vorrichtung gemäß Anspruch 25, wobei ein Verhältnis $P_2/P_1$ einen Periodenlänge $P_2$ des zweiten periodischen Oberflächenmusters (40b) hinsichtlich einer Periodenlänge $P_1$ des ersten periodischen Oberflächenmusters (40a) innerhalb eines Bereiches von 1,5 ± 0,2 ist und ein Verhältnis $P_3/(\lambda/n_d)$ zwischen einer Periodenlänge $P_3$ des dritten periodischen Oberflächenmusters (40c) und einem Wert $\lambda/n_d$, der durch Teilen der Wellenlänge $\lambda$ des übertragenen Lichts, dessen Intensität gesteigert wird, durch den wirksamen Brechungsindex $n_d$ des Mediums, das im wesentlichen an die zweite Oberfläche (20b) angrenzend ist, innerhalb eines Bereiches von 1,5 ± 0,2 ist.

33. Optische Vorrichtung gemäß Anspruch 26, wobei ein Verhältnis $P_2/P_1$ einer Periodenlänge $P_2$ des zweiten periodischen Oberflächenmusters (40b) hinsichtlich einer Periodenlänge $P_1$ des ersten periodischen Oberflächenmusters (40a) innerhalb eines Bereiches von 1,5 ± 0,2, ist, und unter der Annahme, dass die Wellenlänge des übertragenen Lichts, dessen Intensität erhöht wird, $\lambda$ ist, die Permittivität des leitfähigen Dünnfilms $\varepsilon_m$ ist und die Permittivität des Mediums, das im wesentlichen an die zweite Oberfläche (20b) angrenzend ist, $\varepsilon_d$ ist, eine Verhältnisformel der Periodenlänge $P_3$ des dritten periodischen Oberflächenmusters (40c) $P_3/(\lambda/(\varepsilon_m \cdot \varepsilon_d/(\varepsilon_m+\varepsilon_d))^{1/2})$ innerhalb eines Bereichs von 1,5 ± 0,2 sein kann.

34. Optische Vorrichtung gemäß Anspruch 2, wobei ein Öffnungsdurchmesser der Öffnung (30) kleiner ist als eine Wellenlänge des einfallenden Lichts.

35. Optische Vorrichtung gemäß Anspruch 15, wobei ein Öffnungsdurchmesser der Öffnung (30) kleiner ist als eine Wellenlänge des einfallenden Lichts.

36. Optische Vorrichtung gemäß Anspruch 27, wobei ein Öffnungsdurchmesser der Öffnung (30) kleiner ist als eine Wellenlänge des einfallenden Lichts.

37. Optische Vorrichtung gemäß Anspruch 2, wobei das periodische Oberflächenmuster in eine konzentrisch kreisförmige Form gebildet ist.

38. Optische Vorrichtung gemäß Anspruch 15, wobei das periodische Oberflächenmuster in eine konzentrisch kreisförmige Form gebildet ist.

39. Optische Vorrichtung gemäß Anspruch 27, wobei das periodische Oberflächenmuster in eine konzentrisch kreisförmige Form gebildet ist.

40. Optische Vorrichtung gemäß Anspruch 2, wobei das periodische Oberflächenmuster zentriert auf die Öffnung periodisch angeordnet ist.

41. Optische Vorrichtung gemäß Anspruch 15, wobei das periodische Oberflächenmuster zentriert auf die Öffnung periodisch angeordnet ist.

42. Optische Vorrichtung gemäß Anspruch 27, wobei das periodische Oberflächenmuster zentriert auf die Öffnung periodisch angeordnet ist.

43. Optischer Kopf, der Informationen in einem optischen Aufzeichnungsmedium durch Licht von einer Lichtquelle aufzeichnet, wobei der optische Kopf umfasst: Wellenleitmittel zum Leiten des Ausgangslichts der Lichtquelle; Kondensormittel zum Kondensieren des Lichts, das durch das Wellenleitmittel geleitet wird; und eine optische Vorrichtung gemäß Anspruch 2, die das optische Aufzeichnungsmedium mit einem Teil des Lichts, das durch das Kondensormittel kondensiert wird, bestrahlt.

44. Optischer Kopf, der Informationen in einem optischen Aufzeichnungsmedium durch Licht von einer Lichtquelle aufzeichnet, wobei der optische Kopf umfasst: Wellenleitmittel (100) zum Leiten des Ausgangslichts der Lichtquelle; Kondensormittel zum Kondensieren des Lichts, das durch das Wellenleitmittel (100) geleitet wird; und eine optische Vorrichtung gemäß Anspruch 15, die das optische Aufzeichnungsmedium mit einem Teil des Lichts, das durch das Kondensormittel kondensiert wird bestrahlt.

45. Optischer Kopf, der Informationen in einem optischen Aufzeichnungsmedium (150) durch Licht von einer Lichtquelle aufzeichnet, wobei der optische Kopf umfasst: Wellenleitmittel (100) zum Leiten des Ausgangslichts der Lichtquelle;

Kondensormittel zum Kondensieren des Lichts, das durch das Wellenleitmittel (100) geleitet wird; und eine optische Vorrichtung gemäß Anspruch 27, die das optische Aufzeichnungsmedium (150) mit einem Teil des Lichts, das durch das Kondensormittel kondensiert wird bestrahlt.

46. Optische Aufzeichnungsvorrichtung mit: einem optischer Kopf (200), der Informationen in einem optischen Aufzeichnungsmedium (150) durch Licht von einer Lichtquelle aufzeichnet, wobei der optische Kopf (200) umfasst: Wellenleitmittel (100) zum Leiten des Ausgangslichts der Lichtquelle; Kondensormittel zum Kondensieren des Lichts, das durch das Wellenleitmittel (100) geleitet wird; und eine optische Vorrichtung gemäß Anspruch 2, die das optische Aufzeichnungsmedium (150) mit einem Teil des Lichts, das durch das Kondensormittel kondensiert wird, bestrahlt.

47. Optisches Aufzeichnungsmittel mit: einem optischer Kopf (200), der Informationen in einem optischen Aufzeichnungsmedium (150) durch Licht von einer Lichtquelle aufzeichnet, wobei der optische Kopf (200) umfasst: Wellenleitmittel (100) zum Leiten des Ausgangslichts der Lichtquelle; Kondensormittel zum Kondensieren des Lichts, das durch das Wellenleitmittel (100) geleitet wird; und eine optische Vorrichtung gemäß Anspruch 15, die das optische Aufzeichnungsmedium (150) mit einem Teil des Lichts, das durch das Kondensormittel kondensiert wird, bestrahlt.

48. Optisches Aufzeichnungsmittel mit: einem optischer Kopf (200), der Informationen in einem optischen Aufzeichnungsmedium (150) durch Licht von einer Lichtquelle aufzeichnet, wobei der optische Kopf (200) umfasst: Wellenleitmittel (100) zum Leiten des Ausgangslichts der Lichtquelle; Kondensormittel zum Kondensieren des Lichts, das durch das Wellenleitmittel (100) geleitet wird; und eine optische Vorrichtung gemäß Anspruch 27, die das optische Aufzeichnungsmedium (150) mit einem Teil des Lichts, das durch das Kondensormittel kondensiert wird, bestrahlt.

49. Kondensorvorrichtung, die nur Licht mit einer spezifischen Wellenlänge aus Licht von einer Lichtquelle kondensiert, mit:

    einer optischen Vorrichtung gemäß Anspruch 2.

50. Kondensorvorrichtung, die nur Licht mit einer spezifischen Wellenlänge aus Licht von einer Lichtquelle kondensiert, mit:

    einer optischen Vorrichtung gemäß Anspruch 15.

51. Kondensorvorrichtung, die nur Licht mit einer spezifischen Wellenlänge aus Licht von einer Lichtquelle kondensiert, mit:

    einer optischen Vorrichtung gemäß Anspruch 27.

52. Optisches Nahfeldmikroskop mit:

    einer optischen Vorrichtung gemäß Anspruch 2, die nur Licht mit einer spezifischen Wellenlänge aus Licht von einer Lichtquelle kondensiert; und
    Detektionsmittel zum Empfangen des Lichts, das durch die optische Vorrichtung emittiert wird.

53. Optisches Nahfeldmikroskop mit:

    einer optischen Vorrichtung gemäß Anspruch 15, die nur Licht mit einer spezifischen Wellenlänge aus Licht von einer Lichtquelle kondensiert; und
    Detektionsmittel (530) zum Empfangen des Lichts, das durch die optische Vorrichtung emittiert wird.

54. Optisches Nahfeldmikroskop mit:

    einer optischen Vorrichtung gemäß Anspruch 27, die nur Licht mit einer spezifischen Wellenlänge aus Licht von einer Lichtquelle kondensiert; und
    Detektionsmittel (530) zum Empfangen des Lichts, das durch die optische Vorrichtung emittiert wird.

**Revendications**

1. Dispositif optique comprenant : un film mince conducteur (20) ayant des première et seconde surfaces (20a, 20b) ; au moins une ouverture (30) s'étendant à travers le film à partir de la première surface (20a) jusqu'à la seconde surface (20b), et un motif de surface périodique disposé sur au moins l'une des première et seconde surfaces (20a, 20b), une intensité de lumière tombant sur la première surface (20a) et transmise à la seconde surface (20b) à travers l'ouverture (30) étant accrue en comparaison avec un cas dans lequel un motif de surface périodique quelconque n'est pas disposé,
   **caractérisé en ce que**
   le motif de surface périodique inclut des premier et deuxième motifs de surfaces périodiques (40a, 40b) ayant des longueurs de période différentes, et la longueur de période du deuxième motif de surface périodique (40b) est sensiblement égale à un nombre impair de demi-périodes de la longueur de période du premier motif de surface périodique (40a).

2. Dispositif optique selon la revendication 1, dans lequel des polaritons de plasmon de surface excités par le premier motif de surface périodique (40a) subissent une réflexion de Bragg d'ordre impair par le deuxième motif de surface périodique (40b).

3. Dispositif optique selon la revendication 1, dans lequel un rapport $P_2/P_1$ entre une longueur de période $P_2$ du deuxième motif de surface périodique (40b) et une longueur de période $P_1$ du premier motif de surface périodique (40a) se situe dans une plage de $\dfrac{N}{2} \pm 0,2,$ où N est un nombre impair.

4. Dispositif optique selon la revendication 1, dans lequel un rapport $P_2/P_1$ entre une longueur de période $P_2$ du deuxième motif de surface périodique (40b) et une longueur de période $P_1$ du premier motif de surface périodique (40a) se situe dans une plage de $0,5 \pm 0,2$.

5. Dispositif optique selon la revendication 1, dans lequel un rapport $P_2/P_1$ entre une longueur de période $P_2$ du deuxième motif de surface périodique (40b) et une longueur de période $P_1$ du premier motif de surface périodique (40a) se situe dans une plage de $1,5 \pm 0,2$.

6. Dispositif optique selon la revendication 1, dans lequel l'intensité de la lumière transmise à travers l'ouverture (30) augmente de 20 % ou plus en comparaison avec celle de la lumière transmise à travers une ouverture d'un dispositif qui n'est pas pourvu du deuxième motif de surface périodique (40b).

7. Dispositif optique selon la revendication 2, dans lequel l'intensité de la lumière transmise à travers l'ouverture (30) augmente de 20 % ou plus en comparaison avec celle de la lumière transmise à travers une ouverture d'un dispositif qui n'est pas pourvu du deuxième motif de surface périodique (40b).

8. Dispositif optique selon la revendication 1, dans lequel les premier et deuxième motifs de surface périodiques (40a, 40b) sont disposés sur le même plan que la première ou la seconde surface (20a, 20b).

9. Dispositif optique selon la revendication 2, dans lequel les premier et deuxième motifs de surface périodiques (40a, 40b) sont disposés sur le même plan que la première ou la seconde surface (20a, 20b).

10. Dispositif optique selon la revendication 1, dans lequel le premier motif de surface périodique (40a) est disposé de façon à correspondre avec une région sur laquelle la lumière tombe, et le deuxième motif de surface périodique (40b) est disposé de façon externe par rapport au premier motif de surface périodique (40a).

11. Dispositif optique selon la revendication 2, dans lequel le premier motif de surface périodique (40a) est disposé de façon à correspondre avec une région sur laquelle la lumière tombe, et le deuxième motif de surface périodique (40b) est disposé de façon externe par rapport au premier motif de surface périodique (40a).

12. Dispositif optique selon la revendication 10, dans lequel la région pourvue du premier motif de surface périodique (40a) est plus large que la région sur laquelle tombe la lumière.

**13.** Dispositif optique selon la revendication 11, dans lequel la région pourvue du premier motif de surface périodique (40a) est plus large que la région sur laquelle tombe la lumière.

**14.** Dispositif optique comprenant : un film mince conducteur (20) ayant des première et seconde surfaces (20a, 20b), et une pluralité de premières ouvertures agencées périodiquement (30) s'étendant à travers le film depuis la première surface (20a) jusqu'à la seconde surface (20b), une intensité de lumière tombant sur la première surface (20a) et transmise à la seconde surface (20b) à travers la pluralité des premières ouvertures (30) étant accrue en comparaison avec un cas dans lequel la pluralité de premières ouvertures n'est pas agencée périodiquement, **caractérisé en ce que** le film mince conducteur (20) inclut en outre soit des secondes ouvertures périodiques (31), soit des motifs de surface périodiques (40b) formés autour des premières ouvertures périodiques avec une longueur de période qui est différente de celle des premières ouvertures périodiques, les secondes ouvertures périodiques (31) étant différentes de la pluralité de premières ouvertures (30) s'étendant à travers le film depuis la première surface (20a) jusqu'à la seconde surface (20b), les motifs de surface périodiques étant formés sur l'une des première et seconde surfaces (20a, 20b), et la longueur de période des secondes ouvertures périodiques (31) ou des motifs de surface périodiques est sensiblement égale à un nombre impair de demi-périodes de la longueur de période des premières ouvertures périodiques.

**15.** Dispositif optique selon la revendication 14, dans lequel des polaritons de plasmon de surface excités par les premières ouvertures périodiques subissent une réflexion de Bragg d'ordre impair par les secondes ouvertures périodiques (31) ou les motifs de surface périodiques (40b).

**16.** Dispositif optique selon la revendication 14, dans lequel un rapport $P_2/P_1$ entre une longueur de période $P_2$ des secondes ouvertures périodiques (31) ou des motifs de surface périodiques (40b) et une longueur de période $P_1$ des premières ouvertures périodiques se situe dans une plage de $\dfrac{N}{2} \pm 0{,}2$, où N est un nombre impair.

**17.** Dispositif optique selon la revendication 14, dans lequel un rapport $P_2/P_1$ entre une longueur de période $P_2$ des secondes ouvertures périodiques (31) ou des motifs de surface périodiques (40b) et une longueur de période $P_1$ des premières ouvertures périodiques se situe dans une plage de $0{,}5 \pm 0{,}2$.

**18.** Dispositif optique selon la revendication 14, dans lequel un rapport $P_2/P_1$ entre une longueur de période $P_2$ des secondes ouvertures périodiques (31) ou des motifs de surface périodiques (40b) et une longueur de période $P_1$ des premières ouvertures périodiques se situe dans une plage de $1{,}5 \pm 0{,}2$.

**19.** Dispositif optique selon la revendication 14, dans lequel l'intensité de la lumière transmise à travers les premières ouvertures périodiques augmente de 20 % ou plus en comparaison avec celle de la lumière transmise à travers les ouvertures périodiques d'un dispositif qui n'est pas pourvu des secondes ouvertures périodiques (31) ou des motifs de surface périodiques (40b).

**20.** Dispositif optique selon la revendication 15, dans lequel l'intensité de la lumière transmise à travers les premières ouvertures périodiques augmente de 20 % ou plus en comparaison avec celle de la lumière transmise à travers les ouvertures périodiques d'un dispositif qui n'est pas pourvu des secondes ouvertures périodiques (31) ou des motifs de surface périodiques (40b).

**21.** Dispositif optique selon la revendication 14, dans lequel les premières ouvertures périodiques sont disposées de façon à correspondre à une région sur laquelle la lumière tombe, et les secondes ouvertures périodiques (31) ou les motifs de surface périodiques (40b) sont disposés de façon externe par rapport aux premières ouvertures périodiques.

**22.** Dispositif optique selon la revendication 15, dans lequel les premières ouvertures périodiques sont disposées de façon à correspondre à une région sur laquelle la lumière tombe, et les secondes ouvertures périodiques (31) ou les motifs de surface périodiques (40b) sont disposés de façon externe par rapport aux premières ouvertures périodiques.

**23.** Dispositif optique selon la revendication 14, dans lequel une région pourvue des premières ouvertures périodiques est plus large que la région sur laquelle tombe la lumière.

**24.** Dispositif optique selon la revendication 15, dans lequel une région pourvue des premières ouvertures périodiques est plus large que la région sur laquelle tombe la lumière.

**25.** Dispositif optique selon la revendication 1, dans lequel les premier et deuxième motifs de surface périodiques (40a, 40b) sont disposés sur la première surface (20a), et un troisième motif de surface périodique (40c) est disposé sur la seconde surface (20b), et

la longueur de période du troisième motif de surface périodique (40c) est sensiblement égale à $\frac{N}{2}$ d'une valeur $\lambda/n_d$ obtenue en divisant une longueur d'onde $\lambda$ de la lumière transmise dont l'intensité est accrue par un indice de réfraction effectif $n_d$ d'un milieu sensiblement adjacent à la seconde surface (20b), où N est un nombre impair.

**26.** Dispositif optique selon la revendication 1, dans lequel les premier et deuxième motifs de surface périodiques (40a, 40b) sont disposés sur la première surface (20a), et un troisième motif de surface périodique (40c) est disposé sur la seconde surface (20b), et
en supposant qu'une longueur d'onde de la lumière transmise dont l'intensité est accrue est $\lambda$, qu'une permittivité du film mince conducteur est $\varepsilon_m$ et qu'une permittivité d'un milieu sensiblement adjacent à la seconde surface (20b) est $\varepsilon_d$, la longueur de période du troisième motif de surface périodique (40c) est sensiblement égale à $\frac{N}{2}$ de $\lambda/(\varepsilon_m.\varepsilon_d/(\varepsilon_m+\varepsilon_d))^{1/2}$, où N est un nombre impair.

**27.** Dispositif optique selon la revendication 1, dans lequel les premier et deuxième motifs de surface périodiques (40a, 40b) sont disposés sur la première surface (20a) et un troisième motif de surface périodique (40c) est disposé sur la seconde surface (20b),
les polaritons de plasmon de surface excités par le premier motif de surface périodique (40a) subissent une réflexion de Bragg d'ordre impair par le deuxième motif de surface périodique (40b), et
les polaritons de plasmon de surface dans le troisième motif de surface périodique (40c) subissent une réflexion de Bragg d'ordre impair dans le troisième motif de surface périodique (40c).

**28.** Dispositif optique selon la revendication 25, dans lequel un rapport $P_2/P_1$ entre une longueur de période $P_2$ du deuxième motif de surface périodique (40b) et une longueur de période $P_1$ du premier motif de surface périodique (40a) se situe dans une plage de $\frac{N}{2} \pm 0,2$, et un rapport $P_3/(\lambda/n_d)$ entre une longueur de période $P_3$ du troisième motif de surface périodique (40c) et une valeur $\lambda/n_d$ obtenue en divisant la longueur d'onde $\lambda$ de la lumière transmise dont l'intensité est accrue par l'indice de réfraction effectif $n_d$ du milieu sensiblement adjacent à la seconde surface (20b) se situe dans une plage de $\frac{N}{2} \pm 0,2$, où N est un nombre impair.

**29.** Dispositif optique selon la revendication 25, dans lequel un rapport $P_2/P_1$ entre une longueur de période $P_2$ du deuxième motif de surface périodique (40b) et une longueur de période $P_1$ du premier motif de surface périodique (40a) se situe dans une plage de $\frac{N}{2} \pm 0,2$, et en supposant qu'une longueur d'onde de la lumière transmise dont l'intensité est accrue est $\lambda$, que la permittivité du film mince conducteur est $\varepsilon_m$ et que la permittivité du milieu sensiblement adjacent à la seconde surface (20b) est $\varepsilon_d$, une formule de relation de la longueur de période $P_3$ du troisième motif de surface périodique (40c) $P_3/(\lambda/(\varepsilon_m.\varepsilon_d/(\varepsilon_m+\varepsilon_d))^{1/2})$ peut se situer dans la plage de $\frac{N}{2} \pm 0,2$, où N est un nombre impair.

**30.** Dispositif optique selon la revendication 25, dans lequel un rapport $P_2/P_1$ entre une longueur de période $P_2$ du deuxième motif de surface périodique (40b) et une longueur de période $P_1$ du premier motif de surface périodique (40a) se situe dans une plage de 0,5 $\pm$ 0,2, et un rapport $P_3/(\lambda/n_d)$ entre une longueur de période $P_3$ du troisième motif de surface périodique (40c) et une valeur $\lambda/n_d$ obtenue en divisant la longueur d'onde $\lambda$ de la lumière transmise dont l'intensité est accrue par l'indice de réfraction effectif $n_d$ du milieu sensiblement adjacent à la seconde surface (20b) se situe dans une plage de 0,5 $\pm$ 0,2.

**31.** Dispositif optique selon la revendication 26, dans lequel un rapport $P_2/P_1$ entre une longueur de période $P_2$ du deuxième motif de surface périodique (40b) et une longueur de période $P_1$ du premier motif de surface périodique (40a) se situe dans une plage de 0,5 $\pm$ 0,2, et en supposant qu'une longueur d'onde de la lumière transmise dont l'intensité est accrue est $\lambda$, que la permittivité du film mince conducteur est $\varepsilon_m$ et que la permittivité du milieu sensiblement adjacent à la seconde surface (20b) est $\varepsilon_d$, une formule de relation de la longueur de période $P_3$ du troisième motif de surface périodique (40c) $P_3/(\lambda/(\varepsilon_m.\varepsilon_d/(\varepsilon_m+\varepsilon_d))^{1/2}$, peut se situer dans la plage de 0,5 $\pm$ 0,2.

**32.** Dispositif optique selon la revendication 25, dans lequel un rapport $P_2/P_1$ entre une longueur de période $P_2$ du deuxième motif de surface périodique (40b) et une longueur de période $P_1$ du premier motif de surface périodique (40a) se situe dans une plage de 1,5 $\pm$ 0,2, et un rapport $P_3/(\lambda/n_d)$ entre une longueur de période $P_3$ du troisième motif de surface périodique (40c) et une valeur $\lambda/n_d$ obtenue en divisant la longueur d'onde $\lambda$ de la lumière transmise dont l'intensité est accrue par l'indice de réfraction effectif $n_d$ du milieu sensiblement adjacent à la seconde surface (20b) se situe dans une plage de 1,5 $\pm$ 0,2.

**33.** Dispositif optique selon la revendication 26, dans lequel un rapport $P_2/P_1$ entre une longueur de période $P_2$ du deuxième motif de surface périodique (40b) et une longueur de période $P_1$ du premier motif de surface périodique (40a) se situe dans une plage de 1,5 $\pm$ 0,2, et en supposant qu'une longueur d'onde de la lumière transmise dont l'intensité est accrue est $\lambda$, que la permittivité du film mince conducteur est $\varepsilon_m$ et que la permittivité du milieu sensiblement adjacent à la seconde surface (20b) est $\varepsilon_d$, une formule de relation de la longueur de période $P_3$ du troisième motif de surface périodique (40c) $P_3/(\lambda/(\varepsilon_m.\varepsilon_d/(\varepsilon_m+\varepsilon_d))^{1/2}$, peut se situer dans la plage de 1,5 $\pm$ 0,2.

**34.** Dispositif optique selon la revendication 2, dans lequel un diamètre d'ouverture de l'ouverture (30) est plus petit qu'une longueur d'onde de la lumière incidente.

**35.** Dispositif optique selon la revendication 15, dans lequel un diamètre d'ouverture de l'ouverture (30) est plus petit qu'une longueur d'onde de la lumière incidente.

**36.** Dispositif optique selon la revendication 27, dans lequel un diamètre d'ouverture de l'ouverture (30) est plus petit qu'une longueur d'onde de la lumière incidente.

**37.** Dispositif optique selon la revendication 2, dans lequel le motif de surface périodique est formé en une forme circulaire concentrique.

**38.** Dispositif optique selon la revendication 15, dans lequel le motif de surface périodique est formé en une forme circulaire concentrique.

**39.** Dispositif optique selon la revendication 27, dans lequel le motif de surface périodique est formé en une forme circulaire concentrique.

**40.** Dispositif optique selon la revendication 2, dans lequel le motif de surface périodique est disposé périodiquement centré sur l'ouverture.

**41.** Dispositif optique selon la revendication 15, dans lequel le motif de surface périodique est disposé périodiquement centré sur l'ouverture.

**42.** Dispositif optique selon la revendication 27, dans lequel le motif de surface périodique est disposé périodiquement centré sur l'ouverture (30).

**43.** Tête optique qui enregistre des informations sur un support d'enregistrement optique par de la lumière provenant d'une source de lumière, la tête optique comprenant : un moyen de guide d'onde pour guider la lumière sortant de la source de lumière ; un moyen de condenseur pour condenser la lumière guidée par le moyen de guide d'onde ; et un dispositif optique selon la revendication 2 qui irradie le support d'enregistrement optique avec une partie de la lumière condensée par le moyen de condenseur.

**44.** Tête optique qui enregistre des informations sur un support d'enregistrement optique par de la lumière provenant d'une source de lumière, la tête optique comprenant : un moyen de guide d'onde (100) pour guider la lumière sortant de la source de lumière ; un moyen de condenseur pour condenser la lumière guidée par le moyen de guide d'onde (100) ; et un dispositif optique selon la revendication 15 qui irradie le support d'enregistrement optique avec une partie de la lumière condensée par le moyen de condenseur.

**45.** Tête optique qui enregistre des informations sur un support d'enregistrement optique (150) par de la lumière provenant d'une source de lumière, la tête optique comprenant : un moyen de guide d'onde (100) pour guider la lumière sortant de la source de lumière ; un moyen de condenseur pour condenser la lumière guidée par le moyen de guide d'onde (100) ; et un dispositif optique selon la revendication 27 qui irradie le support d'enregistrement optique (150) avec une partie de la lumière condensée par le moyen de condenseur.

**46.** Dispositif d'enregistrement optique comprenant : une tête optique (200) qui enregistre des informations dans un support d'enregistrement optique (150) par de la lumière provenant d'une source de lumière, la tête optique (200) comprenant : un moyen de guide d'onde (100) pour guider la lumière sortant de la source de lumière ; un moyen de condenseur pour condenser la lumière guidée par le moyen de guide d'onde (100) ; et un dispositif optique selon la revendication 2 qui irradie le support d'enregistrement optique (150) avec une partie de la lumière condensée par le moyen de condenseur.

**47.** Dispositif d'enregistrement optique comprenant : une tête optique (200) qui enregistre des informations dans un support d'enregistrement optique (150) par de la lumière provenant d'une source de lumière, la tête optique (200) comprenant : un moyen de guide d'onde (100) pour guider la lumière sortant de la source de lumière ; un moyen de condenseur pour condenser la lumière guidée par le moyen de guide d'onde (100) ; et un dispositif optique selon la revendication 15 qui irradie le support d'enregistrement optique (150) avec une partie de la lumière condensée par le moyen de condenseur.

**48.** Dispositif d'enregistrement optique comprenant : une tête optique (200) qui enregistre des informations dans un support d'enregistrement optique (150) par de la lumière provenant d'une source de lumière, la tête optique (200) comprenant : un moyen de guide d'onde (100) pour guider la lumière sortant de la source de lumière ; un moyen de condenseur pour condenser la lumière guidée par le moyen de guide d'onde (100) ; et un dispositif optique selon la revendication 27 qui irradie le support d'enregistrement optique (150) avec une partie de la lumière condensée par le moyen de condenseur.

**49.** Dispositif condensateur qui condense seulement la lumière ayant une longueur d'onde spécifique d'une lumière provenant d'une source de lumière, comprenant :

un dispositif optique selon la revendication 2.

**50.** Dispositif condensateur qui condense seulement la lumière ayant une longueur d'onde spécifique d'une lumière provenant d'une source de lumière, comprenant :

un dispositif optique selon la revendication 15.

**51.** Dispositif condensateur qui condense seulement la lumière ayant une longueur d'onde spécifique d'une lumière provenant d'une source de lumière, comprenant :

un dispositif optique selon la revendication 27.

**52.** Microscope optique en champ proche comprenant :

un dispositif optique selon la revendication 2 qui condense seulement la lumière ayant une longueur d'onde spécifique d'une lumière provenant d'une source de lumière ; et
un moyen de détection pour recevoir la lumière émise par le dispositif optique.

**53.** Microscope optique en champ proche comprenant :

un dispositif optique selon la revendication 15 qui condense seulement la lumière ayant une longueur d'onde spécifique d'une lumière provenant d'une source de lumière ; et

un moyen de détection (530) pour recevoir la lumière émise par le dispositif optique.

**54.** Microscope optique en champ proche comprenant :

un dispositif optique selon la revendication 27 qui condense seulement la lumière ayant une longueur d'onde spécifique d'une lumière provenant d'une source de lumière ; et
un moyen de détection (530) pour recevoir la lumière émise par le dispositif optique.

**I** incident

10

$P_2$   $P_1$   40a   40b   20a

20        30      20b

t

d

**I**output

FIG. 1

(A)                              (B)

30                    30              10

20a

$P_2$

$P_1$

10                              d

40b        40a                20b

d

FIG. 2(A)                    FIG. 2(B)

I incident

10

P₂          P₁                           40a        40b        20a

20                          30                              20b

d

I output

FIG. 3

30

20a                                                    30              10

P₂

P₁

10

40b                                      40a

d

FIG. 4(A)                              FIG. 4(B)

20b

d

FIG. 5(A)

FIG. 5(B)

FIG. 6(A)

FIG. 6(B)

FIG. 7(A)          FIG. 7(B)

FIG. 8(A)

FIG. 8(B)

FIG. 9

FIG. 10(A)

FIG. 10(B)

I incident

10
20a
20
40c   P3
30
20b
d
I output

**FIG. 11**

I incident

10   P2   P1
40a   40b   20a
20
P3   30
40c   20b
d
I output

**FIG. 12**

I incident

10 P$_2$ P$_1$ 40a 40b 20a

20 P$_3$ 30 20b 40c

d

I output

**FIG. 13**

I incident 30

**FIG. 14(A)** 20a

20b

I output

I incident 30

**FIG. 14(B)**

I output 40c

FIG. 15

FIG. 16(A)

FIG. 16(B)

FIG. 17

FIG. 18

410

I incident       10

FIG. 19(A)

410   410

I incident       10   10

FIG. 19(B)

I incident

510

10

520

530

FIG. 20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 11072607 A
- US 5973316 A
- US 2000111851 B
- US 6040936 A
- US 2000171763 B
- US 6236033 B
- US 2001133618 A
- US 6285020 B
- JP 2001291265 A
- EP 1128372 A
- EP 1008870 A

### Non-patent literature cited in the description

- **H. A. Bethe.** Theory of Diffraction by Small Hole. *Physical Review,* 1944, vol. 66, 163-182
- **Ebbesen.** Extraordinary Optical Transmission through Sub-wavelength Hole Arrays. *Nature,* 12 February 1988, vol. 391, 667-669
- **H. Ditlbacher et al.** Two-dimensional Optics with Surface Plasmon Polaritons. *Applied Physics Letters,* 02 September 2002, vol. 81, 1762